(19) **Europäisches Patentamt / European Patent Office / Office européen des brevets**

(11) **EP 1 632 753 B1**

(12) **EUROPÄISCHE PATENTSCHRIFT**

(45) Veröffentlichungstag und Bekanntmachung des Hinweises auf die Patenterteilung:
**09.07.2008 Patentblatt 2008/28**

(51) Int Cl.:
***G01D 5/244*** *(2006.01)*

(21) Anmeldenummer: **05015987.0**

(22) Anmeldetag: **22.07.2005**

(54) **Verfahren zur elektronischen Kalibrierung mechanischer Fertigungstoleranzen von Positionssensoren**

Method of electronic calibration of mechanical tolerances during manufacturing of position sensors

Méthode de calibration électronique de tolérances mécaniques de construction de capteurs de position

(84) Benannte Vertragsstaaten:
**AT CH DE LI**

(30) Priorität: **06.09.2004 DE 102004043448**

(43) Veröffentlichungstag der Anmeldung:
**08.03.2006 Patentblatt 2006/10**

(73) Patentinhaber: **Lenord, Bauer & Co. GmbH**
**46145 Oberhausen (DE)**

(72) Erfinder:
• **Danowski, Markus**
**45966 Gladbeck (DE)**

• **Stritzke, Burghard**
**45896 Gelsenkirchen (DE)**
• **Höller, Heinrich**
**47055 Duisburg (DE)**

(74) Vertreter: **Demski, Siegfried**
**Ackmann, Menges & Demski**
**Patentanwälte**
**Tonhallenstrasse 16**
**47051 Duisburg (DE)**

(56) Entgegenhaltungen:
EP-A- 0 395 936          DE-A1- 4 331 151
DE-A1- 10 056 926          DE-A1- 19 920 596

**Beschreibung**

Die Erfindung betrifft ein Verfahren zur elektronischen Kalibrierung einer Positionssensoreinheit in Abhängigkeit von der mechanischen Stellung zu einer Maßverkörperung, die mindestens zwei phasenversetzte periodische Signale und gegebenenfalls zwei phasenversetzte Referenzsignale zur Positionsbestimmung erzeugt. Die Erfindung betrifft des Weiteren eine Sensoreinheit zur Bestimmung einer linearen oder rotatorischen Position eines Maschinenelementes, in welcher mindestens zwei Sensoren zwei relativ zueinander phasenverletzte Signale in Abhängigkeit der Erregung durch einen Geber erzeugen.

Die Platzierung von Sensoren auf einem Substrat zur elektronischen Positionsdetektion ist grundsätzlich mit einer Positionierungstoleranz behaftet. Eine mit einem Positionssensor ausgestattete Positionssensoreinheit, beispielweise für Maschinen, weist zusätzlich Fertigungstoleranzen auf, die dazu führen, dass eine Positionsabnahmestelle, an der die Position der Positionssensoreinheit, beispielsweise für Maschinen, elektronisch ermittelt werden soll, ebenfalls mit einer von den Fertigungstoleranzen abhängigen Ungenauigkeit behaftet ist. Noch ein weiterer Faktor, der die Präzision der Positionsbestimmung mit Hilfe eines elektronischen Positionsgebers limitiert, ist die Auflösung des dem Meßsystem zugrundeliegenden Messverfahrens, wobei unterschiedliche Messverfahren mit verschiedenen Vor- und Nachteilskombinationen behaftet sind.

Eine gängiges Verfahren zur Herstellung eines beweglichen Maschinenteils, welches eine elektronische Positionsdetektion aufweist, ist, diese Anordnung unter Einhaltung von wirtschaftlich vertretbaren Höchsttoleranzen aufzubauen und die gesamte Anordnung des Maschinenteils einschließlich einer Einheit einer elektronischen Messwertauswertung als fertigungstoleranzbehaftetes Modul nachträglich zu kalibrieren.

Als zu kalibrierendes Element dient sich die Auswerteeinheit an, die unter Verwendung von programmierbaren Microcontrollern vergleichsweise einfach mit einem Korrekturalgorithmus ausgestattet werden kann. Der hierdurch in Kauf genommene Geschwindigkeitsverlust und der daraus resultierende Schleppfehler bei der Positionsbestimmung ist nur gering ausgeprägt, da die mathematischen Korrekturalgorithmen üblicherweise einen gegenüber dem Auswertealgorithmus geringen zusätzlichen Rechenaufwand benötigen.

In der deutschen Offenlegungsschrift DE 100 41 092 A1 wird ein Verfahren zur Korrektur eines Phasenwinkels φ bei der Abtastung einer Codespur offenbart. Das in dieser Offenlegungsschrift offenbarte Verfahren ist für Positionsmessanordnungen geeignet, in denen ein kontinuierliches Signal durch eine Geber-Sensorkombination erzeugt und durch einen mathematischen Algorithmus in einer Recheneinheit mit Hilfe eines mathematischen Korrekturmodells entsprechend interpretiert wird. Das zuletzt genannte und in einen Algorithmus eingebettete Verfahren korrigiert geringfügige Abweichungen einer Phasenverschiebung φ zweier Sinussignale um 90° oder $^\pi/_2$ durch Anwendung von trigonometrischen Umformungen der einzelnen und digitalisierten unkorrigierten Sensorsignale, wobei der tatsächliche Phasenversatz φ der beiden Sensorsignale unter Unterstellung eines klirrfreien Sensorsignals und Anwendung der Arcustangensfunktion berechnet wird und dieser Wert als Korrektureingangsgröße für weitere Interpretationsalgorithmen zur Verfügung steht. In diesem Verfahren wird ein fehlerbehaftetes Sensorausgangssignal in der Auswerteelektronik nachträglich korrigiert.

In der deutschen Patentschrift DE 31 17 554 C2 wird eine Positionsmessvorrichtung offenbart, in der mit Hilfe einer Logikschaltung verschiedene Parameter der Sensorsignale korrigiert werden. Diese sind Amplitude, Gleichspannungsversatz und Phasenverschiebungsfehler. Die Parameter werden aus der Analyse des Sensorsignals über mindestens eine volle Periode ermittelt und in einem nichtflüchtigen Speicher zur Bereitstellung bei der mathematischen Fehlerkorrektur vorgehalten. Auch in diesem Verfahren wird das durch Fertigungstoleranzen bedingte fehlerhafte Sensorsignal nachträglich in der Auswerteeinheit korrigiert.

In der deutschen Offenlegungsschrift DE 100 20 979 A1 wird der Spannungsversatz der Sensorsignale eines Schritt-Drehcodierers unter Zuhilfenahme eines Mikrocomputers rechnerisch in der Auswerteeinheit eliminiert.

In der deutschen Offenlegungsschrift DE 102 60 862 A1 wird ein Verfahren und eine Schaltungsanordnung zur Korrektur eines winkel- und/oder abstandsmessenden Sensorsystems offenbart. Dieses Verfahren korrigiert unter Verwendung von statistischen Methoden rechnerisch die Signale eines Winkelgebers, so dass die fehlerbehafteten Signale zweier korrespondierender Sinus/Cosinussignale in einer Lissajous-Auftragung eine kreisförmige Darstellung ergeben. Auch hier wird das fehlerbehaftete Signal der Auswerteeinheit zugeführt, wobei der Auswerteeinheit ein individuell zugeschnittener Datensatz zur Fehlerkorrektur zur Verfügung gestellt wird.

In der deutschen Patentschrift DE 199 11 822 C1 wird ein Verfahren zur Korrektur von Interpolationsfehlern beim Ablesen von Inkrementalmaßstäben durch einen Positionsgeber offenbart. Auch in diesem Modell wird unter Annahme der Gültigkeit einer Ellipsengleichung für die Signale einer Sensoranordnung ein mathematisches Korrekturmodell in der Auswerteeinheit verwendet, wobei die Auswerteeinheit unter Verwendung der Arcustangens-Funktion die Fehlerparameter berechnet, die für eine Interpolation unter Zuhilfenahme einer Ellipsenfunktion zur Verfügung steht.

In der deutschen Offenlegungsschrift DE 199 14 447 A1 wird ein selbstkalibrierendes Positionswandlersystem und ein dazugehöriges Verfahren offenbart. Dieses Verfahren erlaubt es der Auswerteeinheit unter Zuhilfenahme von statistischen und Fourier-Analysetechniken, die der Auswerteeinheit angebotenen Signale selbständig zu kalibrieren.

In der deutschen Patentschrift DE 43 31 151 C2 wird ein System zur Messung der Absolutposition des beweglichen, zyklischen Teilungsmarken-Trägers eines inkrementellen Positionsgebers offenbart. Auch in dem diesem System zugrundeliegenden Verfahren werden die korrigierten Signale aus den fehlerbehafteten Signalen im laufenden Betrieb berechnet, und die Parameter zur Korrektur werden ständig aktualisiert.

Schließlich wird in der deutschen Offenlegungsschrift DE 199 50 902 A1 ein System und Verfahren zur Steuerung einer Positioniereinrichtung, insbesondere von Stellantrieben bei Werkzeugmaschinen, sowie Phasenmischvorrichtung offenbart, in welchem kalibrierten Signalen von Positionssensoren zusätzliche Signale in Abhängigkeit von externen Parametern, wie beispielsweise Temperatur, überlagert werden, um so die Positionsinformationen der Sensoren künstlich zu verfälschen. Die Verfälschung soll beispielsweise zur volumetrischen Kompensation verwendet werden, bei der eine Positionsbestimmung in Relation zu einem sich unter Temperatur ausdehnenden Werkstück dynamisch korrigiert werden soll. In diesem Verfahren werden also durch Signalmodulation bereits korrigierten Signalen weitere externe Signale zugemischt, um dynamische Signal- und damit Positionskorrekturen vornehmen zu können.

Soll in Maschinen, beispielweise eine Positionssensoreinheit, im Wartungs- oder Reparaturfall ersetzt werden, so ist es notwendig, die neue Positionssensoreinheit an die vorhandene Maschine durch Kalibrierung anzupassen. Dies kann durch mechanische Kalibrierung der Maschine, der Positionssensoreinheit selbst oder beider oder durch softwareseitige Kalibrierung vorgenommen werden. In jedem Falle ist es dazu notwendig, dass eine Fachkraft mit Expertenwissen über die zu kalibrierende Maschine die Kalibrierung vornimmt. Dies bedeutet erhöhte Wechselkosten, lange Rüstzeiten für die zu wartende oder zu reparierende Maschine und eine nicht einfache Auswechselbarkeit der zu ersetzenden Positionssensoreinheit.

Der Ersatz der fertigungstoleranzbehafteten Positionssensoreinheit mitsamt einer dazu passenden und bereits kalibrierten Auswerteeinheit verbietet sich aufgrund der damit verbundenen und zu hohen Ersatzteilkosten.

Die mechanische Nachkalibrierung der Sensorelemente auf der Positionssensoreinheit ist nur unter Einsatz eines mechanischen Kalibriersystems, welches die gesamte Einheit verteuert, und unter Einsatz fachkraftintensiver Kalibrierungsarbeit möglich.

Aufgabe der Erfindung ist es daher, ein Verfahren zur gleichzeitigen statischen, elektronischen Kalibrierung des absoluten und relativen Phasenversatzes zweier oszilierender Signale in Positionssensoreinheiten zur Verfügung zu stellen.

Eine weitere Aufgabe der Erfindung ist es, die Kalibrierung ohne Einsatz dauerhafter externer Hilfssignale vorzunehmen.

Noch eine Aufgabe der Erfindung ist es, ein robustes Verfahren zur elektronischen Kalibrierung von Positionssensoreinheiten zur Verfügung zu stellen, das Fertigungs- und Positionierungstoleranzen weitestgehend ausgleicht.

Noch eine weitere Aufgabe der Erfindung ist es, ein analogelektronisches Kalibrierverfahren für Positionssensoreinheiten zur Verfügung zu stellen, welches zu einem hohen Grade automatisierbar ist, wobei der verbleibende nicht automatisierte Anteil auch von Fachkräften ohne Expertenwissen durchgeführt werden können soll.

Es ist des Weiteren Aufgabe der Erfindung, eine Positionssensoreinheit zur Verfügung zu stellen, welche durch das erfindungsgemäße Kalibrierverfahren kalibriert werden kann. Des Weiteren wird ein System zur Kalibrierung von Positionssensoreinheiten zur Verfügung gestellt, welches die Fehlweisung dieser Positionssensoreinheit selbstständig erfasst und Kalibrierungsvorschläge ausgibt und gegebenenfalls an eine vollautomatische Bestückungsmaschine für Elektronikkomponenten weiterleitet.

Die Erfindung wird gelöst durch eine gleichzeitige individuelle elektronische Überlagerung je zweier unkalibrierter Signale zu je zwei neuen kalibrierten Signalen zur Kalibrierung von absoluten und relativen Phasenfehlern. Weitere vorteilhafte Ausgestaltungen der Erfindung ergeben sich durch die Unteransprüche.

Der Lösung liegt zugrunde, dass zwei phasenversetzte periodische und mathematisch orthogonale Signale, insbesondere solche Signale, die einer Sinus- oder Cosinusfunktion folgen, durch Linearkombination zu einem neuen artgleichen Signal mit einem vorbestimmten Phasenversatz überlagert werden können.

Im Gegensatz zu den offenbarten Korrekturverfahren in den oben genannten Druckschriften wird im erfindungsgemäßen Verfahren nach vorgenommener Kalibrierung keine externe Referenz und auch keine Recheneinheit zur Durchführung einer mathematischen Division oder einer Arcustangensfunktion verwendet. Die vorhandenen unkalibrierten Sensorsignale werden in Abhängigkeit von der eigenen Fehlweisung und individuell zu je zwei neuen kalibrierten Signalen überlagert.

Dies hat den Vorteil, dass zur Herstellung der Positionssensoreinheit keine aufwändigen mechanischen Fertigungsprozesse mit hoher Genauigkeit notwendig sind und dennoch die Positionssensoreinheit wesentlich preiswerter und genauer herstellbar ist als es im Stand der Technik derzeit möglich ist.

Des Weiteren hat das erfindungsgemäße Verfahren den Vorteil, dass solche Maschinen mit neuen Positionssensoreinheiten für zu positionierende Maschinenelemente nachgerüstet werden können, die ein unverfälschtes Sensorsignal benötigen.

Noch ein weiterer Vorteil des erfindungsgemäßen Verfahrens ist es, dass der Ersatz der Positionssensoreinheiten in Maschinen gegebenenfalls auch von Fachkräften ohne Expertenwissen und damit vom Kunden selbst durchgeführt werden kann.

Im Folgenden wird die Bestimmung der individuellen Überlagerungsanteile am erfindungsgemäß kalibrierten Signal erläutert:

Die nicht übereinstimmende Viertel-Periodenlänge eines Positionsgebers mit dem Abstand zweier Sensoren eines Sensorpaars zur Generierung eines Sinus/Cosinussignals zueinander führt zu einer relativen Phasenverschiebung des Signaldubletts der Sensoren beim Vorbeiziehen des Gebers, so dass das Sensorenpaar ein Signaldublett erzeugt, das nicht um eine viertel Periode -entsprechend eines Sinus- und Cosinussignals- gegeneinander verschoben ist, sondern von dieser idealen Viertel-Periodenlänge abweicht.

Die Verdrehung dieses Sensorpaars gegenüber der lateralen Bewegungsrichtung von Sensor und periodischem Geber führt zu einer effektiven Verkürzung des Sensorabstandes, was zu einer geringeren relativen Phasenverschiebung des Signaldubletts führt.

Die zufällige Platzierung des Sensorpaars führt zu einer Phasenverschiebung des gesamten Signaldubletts gegenüber einer externen Referenz.

Die tatsächliche relative Phasenverschiebung der beiden periodischen und unkalibrierten Sensorsignale eines Sensorpaars gegenüber der Phasenverschiebung $\pi/2$ zur Erzeugung eines Sinus- und eines Cosinussignals ist im Folgenden mit $\gamma$ bezeichnet, die tatsächliche Phasenverschiebung des unkalibrierten Signaldubletts gegenüber einer externen Referenz ist im Folgenden mit $\Delta$ bezeichnet. Die kalibrierte Position des Signaldubletts in der unkalibrierten Signalperiode ist durch ein Produkt aus inverser Periodenlänge $\omega$ des Positionsgebers in rad pro Positionsmaßstab mit x als Positionsangabe dargestellt, wobei die kalibrierte Position anhand eines aus beiden Signalen willkürlich gewählten Signals bestimmt und beiden Signalen zugeordnet wird. Der verbleibende unkalibrierte Unterschied wird durch $\gamma$ beschrieben.

Die Korrektur von $\gamma$ ist durch eine erste Linearkombination beider unkalibrierter Signale erhältlich. Die Korrektur von $\Delta$ ist durch eine abermalige Linearkombination der bereits relativphasenkorrigierten Signale zu erhalten.

Die Anteile der Linearkombination zur Korrektur von $\gamma$ ist wie folgt zu berechnen:

Die beiden unkalibrierten Signale $s_1$ und $s_2$ ohne absoluten Phasenversatz $\Delta$ sind:

$$s_1 \quad = \quad \sin(\omega x + \gamma) \tag{1}$$

$$s_2 \quad = \quad \cos(\omega x) \tag{2}$$

Durch Anwendung der trigonometrischen Identität

$$\sin(\alpha +/- \beta) \quad = \quad \sin(\alpha)\cos(\beta) +/- \cos(\alpha)\sin(\beta) \tag{3}$$

zur Korrektur des Signal $s_1$ wird erhalten:

$$\sin([\omega x + \gamma] - \gamma) = \sin(\omega x) = \sin(\omega x + \gamma)\cos(\gamma) - \cos(\omega x + \gamma)\sin(\gamma) \tag{4}$$

Darin kann die bekannte Größe $\sin(\omega x + \gamma)$ gleich $s_1$ ersetzt werden.

$$\sin(\omega x) = s_1 \cos(\gamma) - \cos(\omega x + \gamma)\sin(\gamma) \tag{5}$$

Der Term $\cos(\omega x + \gamma)$ kann darin durch Anwendung der folgenden trigonometrischen Identität ersetzt werden:

$$\cos(\alpha +/- \beta) \quad = \quad \cos(\alpha)\cos(\beta) -/+ \sin(\alpha)\sin(\beta) \tag{6}$$

So erhält man:

$$\sin(\omega x) = s_1 \cos(\gamma) - [\cos(\omega x)\cos(\gamma) - \sin(\omega x)\sin(\gamma)]\sin(\gamma) \qquad (7)$$

Auflösung nach $\sin(\omega x)$ ergibt:

$$\sin(\omega x) = [s_1 \cos(\gamma) - \cos(\omega x)\cos(\gamma)\sin(\gamma)] / [1 - \sin^2(\gamma)] \qquad (8)$$

$$\text{Ersatz von } \cos(\omega x) = s_2 \text{ und } [1 - \sin^2(\gamma)] = \cos^2(\gamma) \qquad (9)$$

$$\sin(\omega x) = [s_1 \cos^{-1}(\gamma) - s_2 \tan(\gamma)] = S_1 \qquad (10)$$

Die Abweichung von der bevorzugten Phasenverschiebung $\pi/2$, nämlich $\gamma$, ist eine Konstante. Somit sind auch $\cos^{-1}(\gamma)$ und $\tan(\gamma)$ je eine Konstante. Das relativkalibrierte Signal $s_1$, im folgenden $S_1$, kann also durch Linearkombination der beiden unkalibrierten Signale $s_1$ und $s_2$ erhalten werden.

Zusätzlich zur relativen Phasenlage zweier Signale eines Signalpaars ist auch das Signaldublett eines Sensorpaars gegenüber einer externen Referenz phasenverschoben. Nach der oben dargelegten Relativkorrektur kann nun auch die Lage beider Signale durch eine abermalige Linearkombination vom relativkalibrierten Signal $S_1$ und dem unkalibrierten Signal $S_2$ erhalten werden.

Zur Vereinfachung wird hier zunächst die Korrektur der Phasenlage des Signaldubletts unter Vernachlässigung der Relativkorrektur beschrieben. Im Anschluss an diese Beschreibung folgt die Kombination der beiden Korrekturverfahren.

Die relativkorrigierten Signale $S_{1,\Delta}$ und $S_{2,\Delta}$ mit dem ausschließlich absoluten Phasenversatz $\Delta$ haben die folgende Signalform:

$$S_{1,\Delta} = \sin(\omega x + \Delta) \qquad (11)$$

$$S_{2,\Delta} = \cos(\omega x + \Delta) \qquad (12)$$

wobei $\omega$ für die inverse Periodenlänge des Gebers in rad/Positionsmaßstab, x für die kalibrierte Position des Sensors gegenüber dem Geber und $\Delta$, wie oben beschrieben, für die Phasenverschiebung des Signaldubletts gegenüber einer externen Referenz steht. Beide Signale können nun durch eine individuelle Linearkombination von $S_{1,\Delta}$ und $S_{2,\Delta}$ um den Phasenbetrag $-\Delta$ verschoben werden, wobei ausschließlich die unkalibrierten Signale zur Erzeugung eines kalibrierten Signale in die Sensorelektronik eingehen. Das Ergebnis ist ein kalibriertes Signaldublett $P_1$ und $P_2$, gleich $S_{1,\Delta}(-\Delta)$ und $S_{2,\Delta}(-\Delta)$, wobei hier zunächst die oben beschriebene Relativkorrektur außer acht gelassen wird.

$$S_{1,\Delta} = \sin(\omega x + \Delta) \qquad (13)$$

$$S_{2,\Delta} = \cos(\omega x + \Delta) \qquad (14)$$

$$P_1 = \sin(\omega x) = S_{1,\Delta}(-\Delta) = \sin([\omega x + \Delta] - \Delta) \qquad (15)$$

$$P_2 \quad = \quad \cos( \omega x ) \quad = \quad S_{2,\Delta}(-\Delta) \quad = \quad \cos( [\omega x + \Delta] - \Delta) \quad \textbf{\textit{(16)}}$$

Darin können die bekannten trigonometrischen Identitäten eingesetzt werden:

$$P_1 \quad = \quad \sin( [\omega x + \Delta] - \Delta) = S_{1,\Delta} \cos( \Delta ) - S_{2,\Delta} \sin( \Delta ) \quad \textbf{\textit{(19)}}$$

$$P_2 \quad = \quad \cos( [\omega x + \Delta] - \Delta) = S_{2,\Delta} \cos( \Delta ) + S_{1,\Delta} \sin( \Delta ) \quad \textbf{\textit{(20)}}$$

Bei genauer Betrachtung ist ersichtlich, dass die phasenkalibrierten Signale $P_1$ und $P_2$ durch eine Linearkombination der unkalibrierten Signale $S_{1,\Delta}$ und $S_{2,\Delta}$ erzeugt werden können. Werden die Terme $\sin([\omega x + \Delta])$ und $\cos([\omega x + \Delta])$ durch $S_{1,\Delta}$ und $S_{2,\Delta}$ ersetzt, so wird erhalten:

$$P_1 \quad = \quad \sin( [\omega x + \Delta] - \Delta) = S_{1,\Delta} \cos( \Delta ) - S_{2,\Delta} \sin( \Delta ) \quad \textbf{\textit{(19)}}$$

und

$$P_2 \quad = \quad \cos( [\omega x + \Delta] - \Delta) = S_{2,\Delta} \cos( \Delta ) + S_{1,\Delta} \sin( \Delta ) \quad \textbf{\textit{(20)}}$$

oder in vektorieller Form:

$$\begin{bmatrix} P_1 \\ P_2 \end{bmatrix} = \begin{bmatrix} \cos(\Delta) & -\sin(\Delta) \\ \sin(\Delta) & \cos(\Delta) \end{bmatrix} \begin{bmatrix} S_{1,\Delta} \\ S_{2,\Delta} \end{bmatrix} \quad \textbf{\textit{(21)}}$$

Die Linearfaktoren, beziehungsweise die Tensorelemente $\cos(\Delta)$ und $\sin(\Delta)$ sind Konstanten.

Aus der weiter oben beschriebenen Relativkorrektur wurden zwei Signale, nämlich das relativkalibrierte Signal $s_1$ gleich $S_1$ und das unkalibrierte Signal $s_2$ erhalten. Diese können nun nach Relativkorrektur einer Absolutkorrektur unterworfen werden. Dies wird im folgenden Abschnitt erläutert.

Die Signale eines Signalpaars weisen typischerweise einen Relativfehler $\gamma$ und einen Absolutfehler $\Delta$ auf, welcher für beide Signale gleichermaßen ausgeprägt ist:

$$I_1 = \sin( \omega x + \gamma + \Delta ) \quad \textbf{\textit{(22)}}$$

$$I_2 = \cos( \omega x + \Delta ) \quad \textbf{\textit{(23)}}$$

In den letzten Ausdrücken stehen $I_1$ und $I_2$ für die beiden unkalibrierten Signale der Sensoren eines Sensorpaars mit dem absoluten Phasenversatz $\Delta$ und dem relativen Phasenversatz $\gamma$.

Die Winkelsumme im Argument der Sinusfunktion von $I_1$ kann als Summe von $\omega x + \Delta$ und $\gamma$ betrachtet werden. Somit wäre das Ergebnis der Relativkorrektur unter Anwendung der oben beschriebenen Relativkorrektur (Einsetzen von *(22), (23)* in *(10))*:

$$Q_1 \quad = \quad \sin(\omega x + \Delta) = [I_1 \cos^{-1}(\gamma) - I_2 \tan(\gamma)] \tag{24}$$

$$I_2 \quad = \quad \cos(\omega x + \Delta) \tag{25}$$

Diese Ausdrücke können nun noch um die absoluten Phasenverschiebung durch Einsetzen in $P_1$ und $P_2$ korrigiert werden (Einsetzen von *(24)*, *(25)* in *(19)*, *(20)*):

$$C_1 \quad = \quad \sin(\omega x) = [I_1 \cos^{-1}(\gamma) - I_2 \tan(\gamma)] \cos(\Delta) - I_2 \sin(\Delta) \tag{26}$$

und

$$C_2 \quad = \quad \cos(\omega x) = I_2 \cos(\Delta) + [I_1 \cos^{-1}(\gamma) - I_2 \tan(\gamma)] \sin(\Delta) \tag{27}$$

Dabei stehen $C_1$ und $C_2$ für das sowohl relativphasenkalibrierte und absolutphasenkalibrierte Signal. oder in kompakter Form:

$$C_1 \quad = \quad \sin(\omega x) = Q_1 \cos(\Delta) - I_2 \sin(\Delta) \tag{28}$$

und

$$C_2 \quad = \quad \cos(\omega x) = I_2 \cos(\Delta) + Q_1 \sin(\Delta) \tag{29}$$

oder vektoriell:

$$\begin{bmatrix} C_1 \\ C_2 \end{bmatrix} = \begin{bmatrix} \cos(\Delta) & -\sin(\Delta) \\ \sin(\Delta) & \cos(\Delta) \end{bmatrix} \begin{bmatrix} Q_1 \\ I_2 \end{bmatrix} \tag{30}$$

unter Einsetzen von (10):

$$\begin{bmatrix} C_1 \\ C_2 \end{bmatrix} = \begin{bmatrix} \cos(\Delta) & -\sin(\Delta) \\ \sin(\Delta) & \cos(\Delta) \end{bmatrix} \begin{bmatrix} \cos(\gamma)^{-1} & -\tan(\gamma) \\ 0 & 1 \end{bmatrix} \begin{bmatrix} I_1 \\ I_2 \end{bmatrix} \tag{31}$$

Ausmultiplikation und Zusammenfassung der unkalibrierten Signale $I_1$ und $I_2$ ergibt:

$$C_1 = \cos(\Delta) \cos^{-1}(\gamma) I_1 \quad - [\cos(\Delta) \tan(\gamma) + \sin(\Delta)] I_2 \tag{32}$$

$$C_2 = \sin(\Delta) \cos^{-1}(\gamma) I_1 \quad - [\sin(\Delta) \tan(\gamma) - \cos(\Delta)] I_2 \tag{33}$$

Somit beträgt der Anteil des unkalibrierten Signals $I_1$ an $C_1$ den konstanten Faktor $[\cos(\Delta) \cos^{-1}(\gamma)]$ und der Anteil des unkalibrierten Signals $I_2$ an $C_2$ den konstanten Faktor $[\cos(\Delta) \tan(\gamma) + \sin(\Delta)]$. Entsprechend beträgt der

Anteil des unkalibrierten Signals $I_1$ an $C_2$ den konstanten Faktor [sin($\Delta$) cos$^{-1}$($\gamma$)] und $I_2$ an $C_2$ den konstanten Faktor [sin($\Delta$) tan($\gamma$) - cos($\Delta$) ].

Ist der relative Phasenversatz gegenüber $^\pi/_2$, nämlich $\gamma$, klein oder geht er gegen Null, so reduziert sich *(32)* und *(33)* zu:

$$C_1 = \cos(\Delta)\, I_1 - \sin(\Delta)\, I_2 \qquad\qquad \textbf{\textit{(34)}}$$

$$C_2 = \sin(\Delta)\, I_1 + \cos(\Delta)\, I_2 \qquad\qquad \textbf{\textit{(35)}}$$

wobei Form *(34)* und *(35)* dann der Form *(28)* und *(29)* entsprechen, welche unter Vernachlässigung des relativen Phasenfehlers entwickelt wurden.

Ist der absolute Phasenversatz $\Delta$ klein oder geht er gegen Null, so reduziert sich *(32)* und *(33)* zu:

$$C_1 = \cos^{-1}(\gamma)\, I_1 - \tan(\gamma)\, I_2 \qquad\qquad \textbf{\textit{(36)}}$$

$$C_2 = I_2 \qquad\qquad \textbf{\textit{(37)}}$$

wobei Form *(36)* der Form *(10)* entspricht, welche unter Vernachlässigung des absoluten Phasenversatzes entwickelt wurde. Entsprechend ist $I_2$ als Referenz gleich $C_2$.

Sind beide Phasenversätze vernachlässigbar klein bis Null, so reduziert sich *(32)* und *(33)*:

$$C_1 = I_1 \qquad\qquad \textbf{\textit{(38)}}$$

$$C_2 = I_2 \qquad\qquad \textbf{\textit{(39)}}$$

was den unkalibrierten Signalen ohne Phasenversatzfehler entspricht.

Die oben stehenden Beziehungen sind unter der Prämisse entwickelt worden, dass $I_2$ willkürlich als relativphasenversatzfrei angenommen wurde, entsprechend Form *(23),* und nur einen Absolutphasenversatz von $\Delta$ aufweist. Des Weiteren wurde willkürlich bestimmt, dass $I_1$ den gesamten Relativphasenversatz aufnimmt und zusätzlich einen Absolutphasenversatz $\Delta$ aufweist. Die beiden Signale werden so in der Entwicklung der Konstanten als asymmetrisch fehlerbehaftet angenommen. Dies hat zur Folge, dass der Absolutphasenversatz an $I_2$ allein gemessen wird und der Relativphasenversatz am Abstand von $I_1$ zu $I_2$. Alternativ und verfahrensäquivalent dazu kann auch $I_1$ als relativphasenversatzfrei angenommen werden und $I_2$ als relativphasenbehaftet. Noch eine verfahrensäquivalente Form dazu ist die willkürliche Bestimmung, $I_1$ eile dem Sollphasenversatz von $^\pi/_2$ um einen halben relativen Phasenversatzwinkel voraus oder laufe diesem um einen halben relativen Phasenversatzwinkel hinterher, und $I_2$ verhält sich korrespondierend dazu mit umgekehrtem Vorzeichen des halben relativen Phasenversatzfehlers. Auch andere Aufteilungen der relativen Phasenversatzfehler sind möglich. Die genannten Alternativen führen zu verschiedenen Eingangsparametern und entsprechend zu anderen Berechnungsgrundlagen für die Signalanteile $I_1$ und $I_2$ an den beiden kalibrierten Signalen $C_1$ und $C_2$, wobei in den alternativen aber verfahrensäquivalenten Vorgehensweisen auch unterschiedliche Anteile der unkalibrierten Signale am kalibrierten Signal erhalten werden. Die Überlagerungsanteile variieren erfindungsgemäß mit dem Referenzpunkt. Hierdurch ist ein Freiheitsgrad gegeben, in dessen Wahl der Fachmann frei ist.

Zur Überlagerung der beiden unkalibrierten Signale wird eine Phasenmischerstufe durch Dimensionierung korrespondierender Elektronikkomponenten mit den unkalibrierten Signalen beaufschlagt.

Die Beaufschlagung eines elektronischen Phasenmischers mit unterschiedlichem Gewicht und Vorzeichen kann vorzugsweise durch Einstellung des Rückkopplungsgrades eines als Vorverstärker geschalteten Operationsverstärkers von dessen Ausgang zu dessen invertierenden (-) Eingang vorgenommen werden, wobei der Ausgang des Vorverstärkers mit einem der Eingänge des Phasenmischers verbunden ist. Am Ausgang des Phasenmischers liegt dann ein Signal vor, welches der Summe oder der Differenz beider unkalibrierten Signale mit den korrespondierenden Gewichtungen entspricht. Die Einstellung des Rückkopplungsgrades wird vorzugsweise durch Verwendung eines Widerstandes oder Potentiometers erreicht, von denen einer vom Ausgang des Operationsverstärkers zum invertierenden (-) Eingang der beiden Eingänge desselben Operationsverstärkers geschaltet und der zweite von diesem Eingang zu einem Referenzpotential, beispielsweise Masse oder 0 V, geschaltet ist. Zum allgemeinen Betrieb eines Operationsverstärkers wird auf die einschlägige Fachliteratur verwiesen.

Die Einstellung des Widerstandsverhältnis wird vorzugsweise mit Potentiometern, mit Trimmern, mit Widerstandsdekaden, die individuell für ein zu kalibrierendes Sensorenpaar bestimmt werden, oder mit digitalen Potentiometern vorgenommen.

Bei der Verwendung von Widerstandsdekaden werden auf der Platine zur Erzeugung der Sensorsignale ein, zwei oder auch mehr parallel geschaltete Bestückungskontakte angeordnet, von denen nach Bestimmung des individuellen Überlagerungsverhältnisses zur Kalibrierung ein Widerstand oder mehr als ein Widerstand zur Erzeugung eines berechneten Widerstandes aus Standardwiderstandsreihen, bevorzugt Reihe E96, bestückt werden.

In einer alternativen Ausführungsform der vorliegenden Erfindung weist der Phasenmischer symmetrische Eingangsaddierstufen auf, wird von einem als Subtrahierer geschalteten Operationsverstärker gefolgt, und die Eingänge der Operationsverstärker des Phasenmischers werden mit unterschiedlichen Signalamplituden aus je einer Vorverstärkerstufe beaufschlagt. Dies hat den Vorteil, dass gegebenenfalls vorhandene Signalgleichspannungsversätze (Spannungs-Bias) und unterschiedliche Verstärkungsgrade der verschiedenen Vorverstärker nach bekannten Maßnahmen durch analoge Schaltungslegung ausgeglichen werden können. Üblicherweise befinden sich an gattungsgemäßen Operationsverstärkern zu beschaltende Eingänge, die eine Korrektur des Bias erlauben.

In diesem alternativen Fall wird für ein berechnetes negatives Vorzeichen der invertierende Eingang am Phasenmischer gewählt, welches zu einer Signalsubtraktion führt. Für ein berechnetes positives Vorzeichen wird der nichtinvertierende Eingang des Phasenmischers, welcher zu einer Signaladdition führt, als Eingang für das unkalibrierte Signal gewählt. Bei zwei gleichen Vorzeichen werden als Addierer geschaltete Eingänge eines Phasenmischers mit den Signalen der Vorverstärkerstufen mit den unkalibrierten Signalen beaufschlagt. Dabei wird zur Kalibrierung vorzugsweise der Verstärkungsfaktor der Vorverstärker variiert und der Ausgang der Vorverstärker wird entsprechend des berechneten Vorzeichens mit unterschiedlichen Eingängen der Phasenmischereinheit verbunden. Alternativ dazu ist es auch möglich, durch Schaltungslegung Widerstände an den Eingängen des Phasenmischers zu variieren.

Die Einstellung der Überlagerung kann an einem Oszilloskop oder mit Hilfe von elektronischen Messmitteln, zum Beispiel PC-Messkarten und entsprechender Software vorgenommen werden. Dazu wird die Positionssensoreinheit realitätsnah erregt, beispielsweise in eine vorkalibrierte Maschine eingesetzt und bewegt, wobei die Ausgänge der Phasenmischer zwei senkrechte Achsen eines Oszilloskops oder des elektrischen Messmittels treiben. Zur Einstellung des Relativphasenversatzes werden die Widerstände, wird der Verstärkungsgrad der Vorverstärker oder werden die Rückkopplungsgrade der Phasenmischer solange variiert, bis die Lissajous-Figur auf dem Oszilloskop oder dem elektronischen Messmittel einem Kreis beziehungsweise der Sollform gleicht.

Alternativ dazu wird eine Signalmessanordnung eingesetzt, deren Messeingänge je mit einem Ausgang der Phasenmischer beaufschlagt werden, wobei das Meßsystem die Elliptizität des Signalpaars automatisch ermittelt und in Kenntnis der in die Sensorversorgungselektronik eingesetzten Bauteile die zur Kalibrierung notwendigen Linearfaktoren der Überlagerung und damit die notwendigen Bauteilwerte automatisch ermittelt.

In einer bevorzugten Ausführungsform des Kalibrierverfahrens wird ein System eingesetzt, welches nicht nur mit den Ausgängen der Phasenmischer beaufschlagt wird, sondern zusätzlich kalibrierte Positionsinformationen des unkalibrierten Maschinenelementes mit Sensoranordnung ermittelt und daraus zusätzlich die Linearfaktoren für den Absolutphasenversatz berechnet und ausgibt.

In einer weiteren bevorzugten Ausführungsform des erfindungsgemäßen Verfahrens weist das Kalibriersystem einen Rechner mit einer Widerstandssimulationseinheit auf. Diese wird auf eine unvollständig bestückte Platine einer Sensorversorgungselektronik aufgesteckt, wobei auf der Platine die zur Kalibrierung notwendigen Bauteile oder Widerstände fehlen. Die Widerstandssimulationseinheit wird beim Aufstecken auf die Platine mit den leeren Kontaktstellen der fehlenden Bauteile verbunden und simuliert einen beliebigen Widerstand, beispielsweise einen Widerstand, der einem Mischungsverhältnis der unkalibrierten Signale von annähernd null entspricht. Die Sensorelektronik wird nun realitätsnah erregt, beispielsweise durch den Einbau in eine vorkalibrierte Maschine, die eine zusätzliche kalibrierte Positionsaufnahmeinheit aufweist und diese Positionsinformationen an das Kalibriersystem übergibt, und die Amplituden und Nulldurchgänge der Signale werden vom Kalibriersystem erfasst. Aus diesen Informationen werden die Phasenversätze ermittelt und die Dimensionierung der notwendigen Bauteilwerte wird nach oben entwickeltem Algorithmus berechnet, so dass die Signale der Sollform entsprechen. Die Ergebnisse werden entweder an eine automatische Bestückungsmaschine zur Bestückung der unvollständig bestückten Platine weitergegeben, oder die Ergebnisse der Berechnung werden zur manuellen Nachbestückung ausgegeben.

Anstelle der Widerstandssimulationseinheit kann auch ein digitales Potentiometer verwendet werden, welches im eingebauten Zustand einen voreingestellten Wert aufweist. Nach Bemessung der Sensoreinheit in dem Maschinenelement wird das digitale Potentiometer entsprechend eingestellt und verbleibt in der elektronischen Schaltung.

Die Erfindung wird im Folgenden anhand von neun Figuren näher erläutert:

Es zeigt:

Fig. 1  eine skizzierte Anordnung eines Sensorpaares und korrespondierende Sensorsignale,

Fig. 2  eine skizzierte Anordnung eines gegenüber der relativen Bewegungsrichtung von Sensor und Geber verdrehtes Sensorpaar und korrespondierende Sensorsignale,

Fig. 3  eine skizzierte Anordnung eines innerhalb der relativen Bewegungsrichtung von Sensor und Geber versetztes Sensorpaar und korrespondierende Sensorsignale,

Fig. 4  eine skizzierte Anordnung eines innerhalb der relativen Bewegungsrichtung von Sensor und Geber versetztes und gegenüber der Bewegungsrichtung verdrehtes Sensorpaar und korrespondierende Sensorsignale,

Fig. 5  ein Schaltplankonzept eines Phasenmischers des erfindungsgemäßen Positionsgebers,

Fig. 6  ein Schaltplankonzept eines Phasenmischers des erfindungsgemäßen Positionsgebers mit digitalen oder diskreten Potentiometern,

Fig. 7  eine Positionssensoreinheit mit erfindungsgemäßem Sensor,

Fig. 8  das erfindungsgemäße System zur automatischen elektronischen Kalibrierung,

Fig. 9  Signaldiagramme der unkalibrierten Signale $I_1$ und $I_2$ und kalibrierten Signale $C_1$ und $C_2$ und

Fig. 10  Signaldiagramme der unkalibrierten Referenzsignale $IR_1$ und $IR_2$

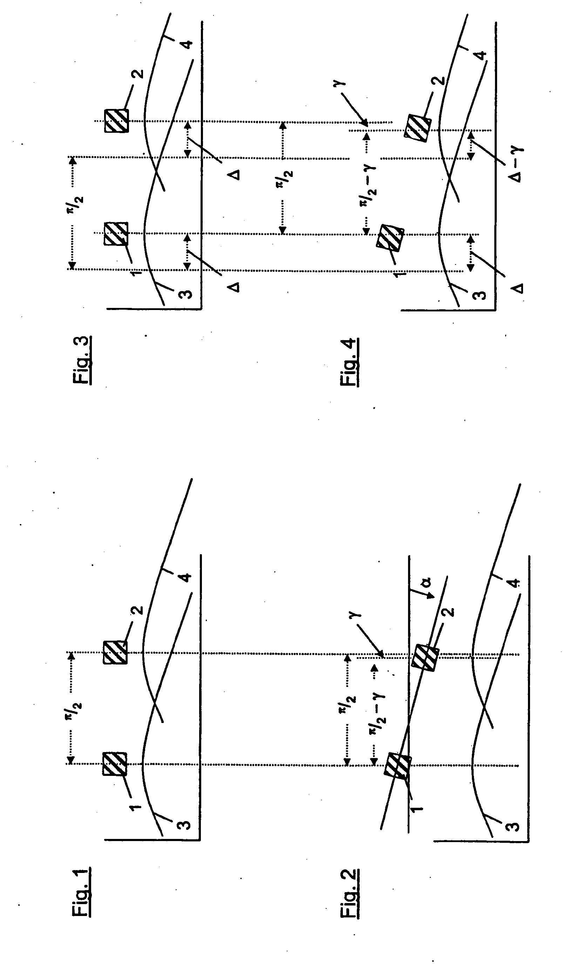

In Figur 1 ist ein Sensorpaar aufweisend Sensoren 1 und 2 abgebildet, an welchem die unkalibrierten Signale 3 und 4 abgreifbar sind. Die Signale 3 und 4 werden von den Sensoren 1 und 2 durch Passage eines Gebers hier einer in Figur 1 nicht gezeigten Maßverkörperung 502 erzeugt. Im Idealfall beträgt der Abstand der beiden Sensoren 1 und 2 genau eine viertel Periode der Periode des Gebers. Bezogen auf eine Periodenlänge von $2\pi$ beträgt dieser Abstand genau $^\pi/_2$.

In Figur 2 ist ein Sensorpaar aufweisend Sensoren 1 und 2 wie in Figur 1 abgebildet, jedoch ist das Sensorpaar mit den Sensoren 1, 2 gegenüber der horizontalen Bewegungsrichtung verdreht. Die Verdrehung ist zur Verdeutlichung in diesem Beispiel übertrieben dargestellt. Durch die Verdrehung verkürzt sich der effektive Abstand der beiden Sensoren 1, 2 in horizontaler Richtung um einen Bruchteil der Geberperiodenlänge, nämlich proportional zu $\sin(\alpha)$, wobei $\alpha$ der Abweichung vom azimuthalen Winkel 0, der Ausrichtung des Sensorpaars in Figur 1, entspricht. Dieser Bruchteil beträgt bezogen auf eine Periodenlänge von $2\pi$ genau $\gamma$. Durch die Verdrehung verkürzt sich somit der relative Phasenversatz der unkalibrierten Signale 3 und 4 um $\gamma$.

In Figur 3 ist das Sensorpaar mit den Sensoren 1, 2 gemäß Figur 1 abgebildet, wobei das Sensorpaar mit den Sensoren 1, 2 in horizontaler Richtung um einen Bruchteil der Geberperiode von $2\pi$, nämlich genau $\Delta$, versetzt ist. Dieser absolute Phasenversatz $\Delta$ ist für beide Sensoren 1 und 2 gleichstark ausgeprägt.

In Figur 4 ist das Sensorpaar gemäß den Figuren 1 bis 3 abgebildet, wobei die Sensoren 1, 2 einen vom Idealfall in Figur 1 abweichenden relativen und absoluten Phasenversatz aufweisen. Der relative Phasenversatz beträgt $\gamma$ und der absolute Phasenversatz beträgt $\Delta$.

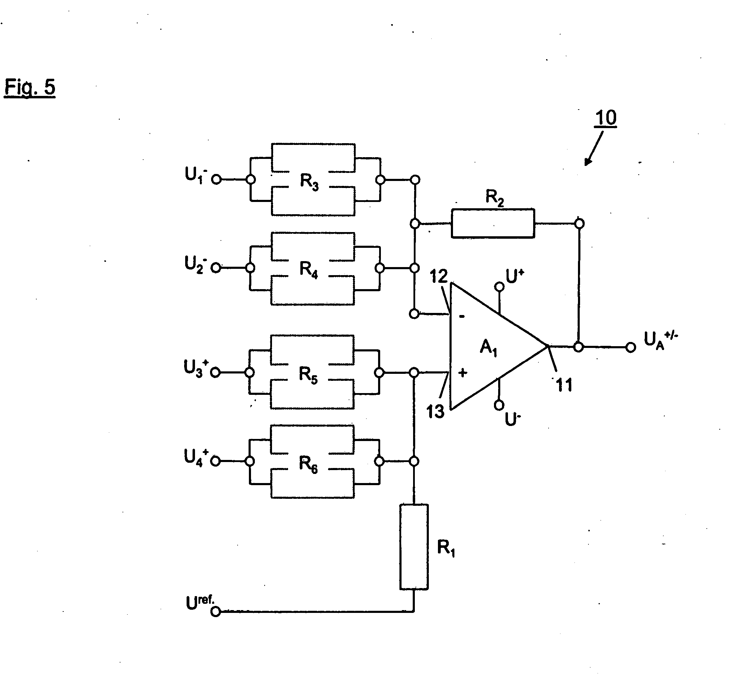

In Figur 5 ist eine prinzipielle elektronische Summier-/Subtrahierschaltung 10 dargestellt, die einen zentralen Operationsverstärker $A_1$ aufweist. Der Ausgang 11 des Operationsverstärkers $A_1$ ist über den Widerstand $R_2$ in den invertierenden Eingang 12 rückgekoppelt. Der nicht-invertierende Eingang 13 ist über einen Widerstand $R_1$ auf ein Referenzpotential $U_{ref.}$ gelegt. In den Operationsverstärker $A_1$ können über die Schaltungseingänge $U_1^-$, $U_2^-$, $U_3^+$ und $U_4^+$ Spannungen, beispielsweise aus einer Sensorsignalvorverstärkereinheit, addiert bzw. subtrahiert werden. Die Ausgangsspannung $U_A^{+/-}$ am Ausgang 11 des Operationsverstärkers $A_1$ beträgt gegenüber dem Referenzpotential $U_{ref.}$

$$U_A^{+/-} = (R_1 / R_5) * U_3^+ + (R_1/R_6) * U_4^+ - (R_2/R_3) * U_1^- - (R_2/R_4) * U_2^- \qquad (40)$$

Die Eingänge $U^+$ und $U^-$ am Operationsverstärker $A_1$ sind für die Betriebsspannung vorgesehen. Die Widerstandsverhältnisse von $R_1$ zu $R_5$ und $R_6$ bzw. von $R_2$ zu $R_3$ und $R_4$ bestimmen den Überlagerungsfaktor der unkalibrierten Signale 3, 4 gemäß Figur 1 bis 4. In der Summier-/Subtrahierschaltung 10 sind die Widerstände $R_3$, $R_4$, $R_5$ und $R_6$ als zwei gestrichelte parallele Widerstände dargestellt. Zur elektronischen Kalibrierung werden die gestrichelten Widerstände zunächst nicht bestückt und durch die Möglichkeit, mehr als einen Widerstand reihen-parallel schalten zu können, ist es möglich, solche Widerstandswerte, die nicht als Widerstand in einer Standardwiderstandsreihe, beispielsweise E96, enthalten sind, durch reihen-parallel geschaltete Widerstände anzunähern. Unter Verwendung des Ergebnisses in **(32)** und **(33)** kann bei vorgegebenen Widerständen $R_1$ und $R_2$ der Wert für die Widerstände $R_1$, $R_2$, $R_3$ oder $R_4$ berechnet werden, wobei zur Überlagerung von zwei unkalibrierten Signalen 3, 4 nur zwei der Eingänge von $U_1^-$, $U_2^-$, $U_3^+$ und $U_4^+$ zu beaufschlagen sind und die verbleibenden Eingänge offen bleiben können. Werden nur die Eingänge $U_1^-$ und $U_2^-$ beaufschlagt, so ist die Summier-/Subtrahierschaltung 10 zu einem invertierenden Addierer reduziert, werden nur die Eingänge $U_3^+$ und $U_4^+$ beaufschlagt, so ist die Summier-/Subtrahierschaltung 10 zu einem Addierer reduziert. Werden $U_1^-$ oder $U_2^-$ und $U_3^+$ oder $U_4^+$ beaufschlagt, so ist die Summier-/Subtrahierschaltung 10 zu einem Subtrahierer reduziert.

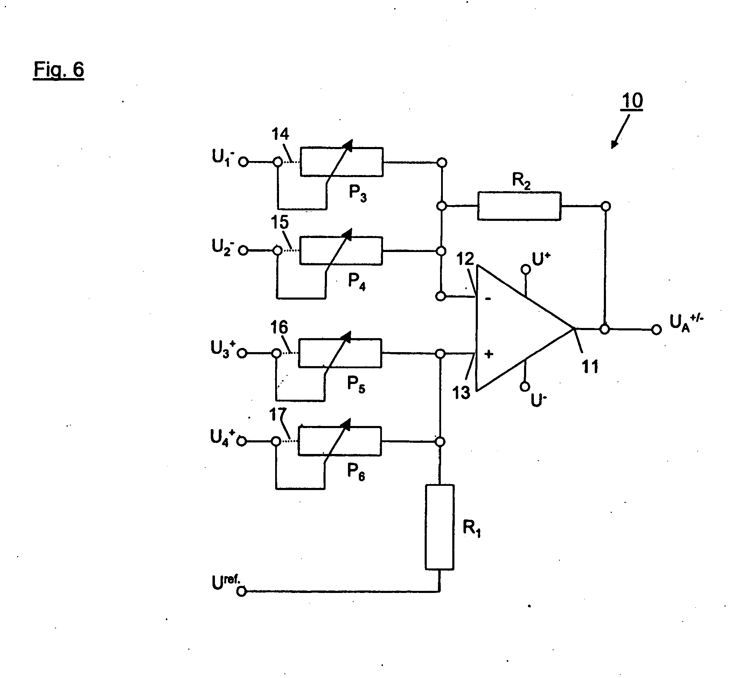

In Figur 6 ist eine Summier-/Subtrahierschaltung 20, welche mit der Schaltung gemäß Figur 5 korrespondiert, abgebildet, jedoch sind die Widerstände $R_3$, $R_4$, $R_5$ und $R_6$ durch Potentiometer $P_3$, $P_4$, $P_5$ und $P_6$ ersetzt. Anstelle die Widerstände $R_3$, $R_4$, $R_5$ und $R_6$ zu bestücken, ist es in Summier-/Subtrahierschaltung 20 möglich, die Potentiometer $P_3$, $P_4$, $P_5$ und $P_6$ einzustellen. Zur Schaltungslegung ist es in Summier-/Subtrahierschaltung 20 möglich, die Ausgänge $U_1^-$ und $U_3^+$ und $U_2^-$ und $U_4^+$ miteinander zu verbinden und die Potentiometer $P_3$ und $P_5$ und $P_2$ und $P_6$ gegenläufig einzustellen, wobei einer der Potentiometer in den hochohmigen Bereich, das andere korrespondierende Potentiometer entsprechend des berechneten Widerstandes eingestellt wird. Statt ein Potentiometer hochohmig einzustellen ist es auch möglich, die Verbindung des hochohmig einzustellenden Potentiometers zu kappen oder dieses Potentiometer nicht zu bestücken. Bei digitalen Potentiometern ist schließlich die Möglichkeit vorhanden, einen hochohmigen Zustand, gleichbedeutend mit nicht verbunden, einzustellen. Durch die gestrichelten Verbindungen 15, 16, 17, 18 ist die Charakteristik des Widerstands in Abhängigkeit vom Einstellwinkel bei mechanischen Potentiometern $P_3$, $P_4$, $P_5$ und $P_6$ veränderbar. Bei digitalen Potentiometern ist die Charakteristik außerdem durch entsprechende Programmierung wählbar.

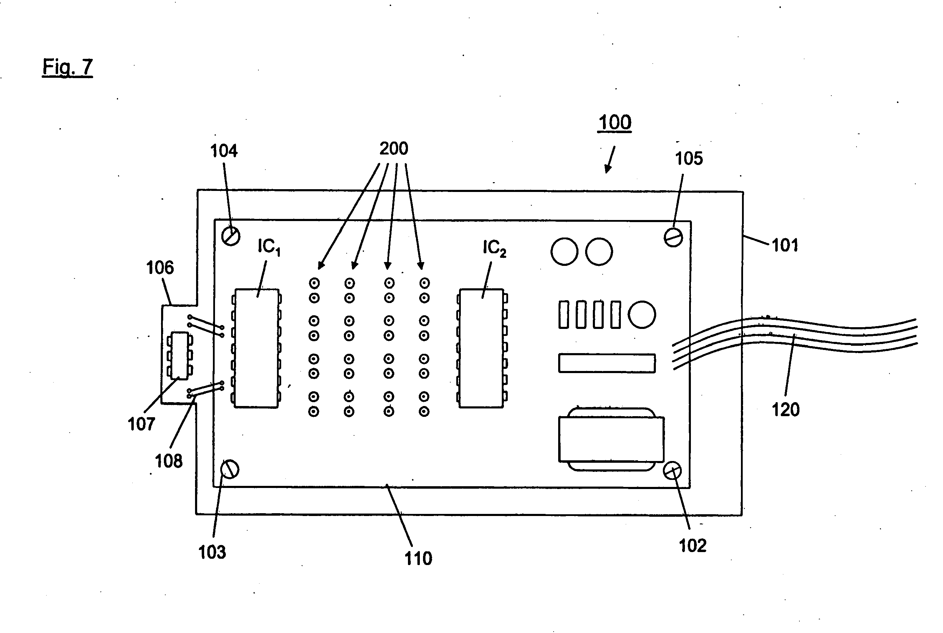

In Figur 7 ist eine Positionssensoreinheit 100 abgebildet, in welchem ein Maschinenelement 101 über Befestigungsanordnungen 102, 103, 104 und 105 mit einer Platine 110 verbunden ist. Das Maschinenelement 101 weist eine Nase 106 auf, auf welcher ein Sensorelement 107, hier in SMD-Bauform präzise angeordnet ist. Die präzise angeordnete Sensoreinheit 107 ist über Verbindungsleitungen 108 mit der Platine 110 verbunden. Auf der Platine 110 befinden sich zwei integrierte Schaltkreise $IC_1$ und $IC_2$, in diesem Beispiel in Dual-Inline-Bauform. Zwischen den integrierten Schaltkreisen $IC_1$ und $IC_2$ befinden sich unbestückte Bestückungspunkte 200, welche noch fehlende Widerstände zur Komplettierung der elektronischen Schaltung auf Platine 110 aufnehmen können. Über die Versorgungs- und Signalleitungen 120 wird das Sensorelement 107 und die Platine 110 mit Strom versorgt und die kalibrierten Signale $C_1$ und $C_2$ werden über die Signalleitungen 120 an eine weiter entfernt angeordnete, hier nicht gezeichnete Auswerteeinheit weitergeleitet. Die Bestückungspunkte 200 sind so mit den integrierten Schaltkreisen $IC_1$ und $IC_2$ verbunden, dass durch Bestückung der Bestückungspunkte 200 mit Widerständen $R_1$, $R_2$, $R_3$, $R_4$, $R_5$, $R_6$ oder $P_3$, $P_4$, $P_5$, $P_6$ die Summier/Subtrahierschaltungen 10, 20 aufgebaut werden können. Die Positionssensoreinheit 100 ist beweglich in eine hier nicht gezeigte Maschine eingebaut und bewegt die Nase 106 mit dem Sensorelement 107 über eine entsprechende, hier nicht gezeichnete Maßverkörperung.

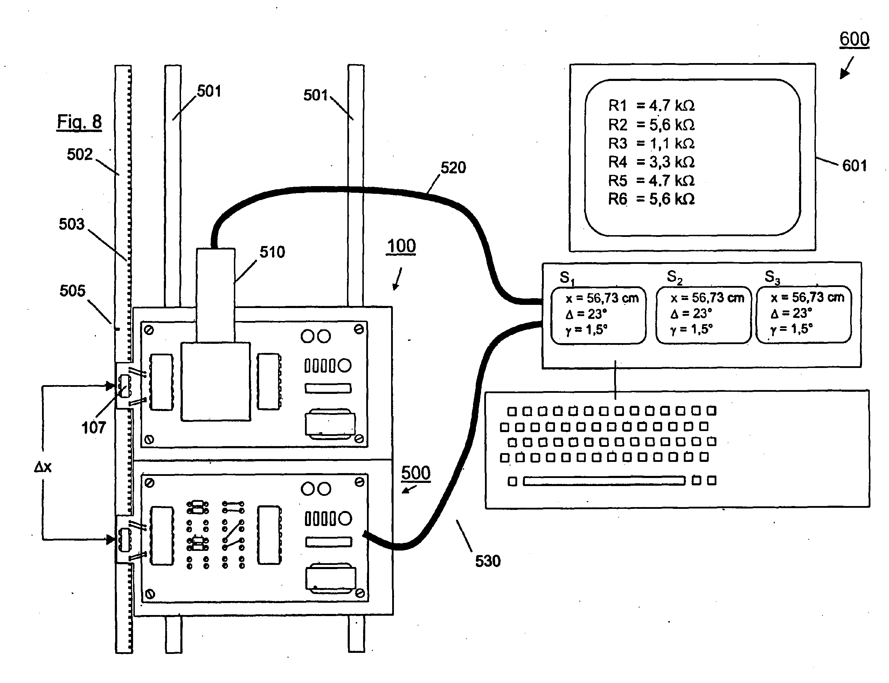

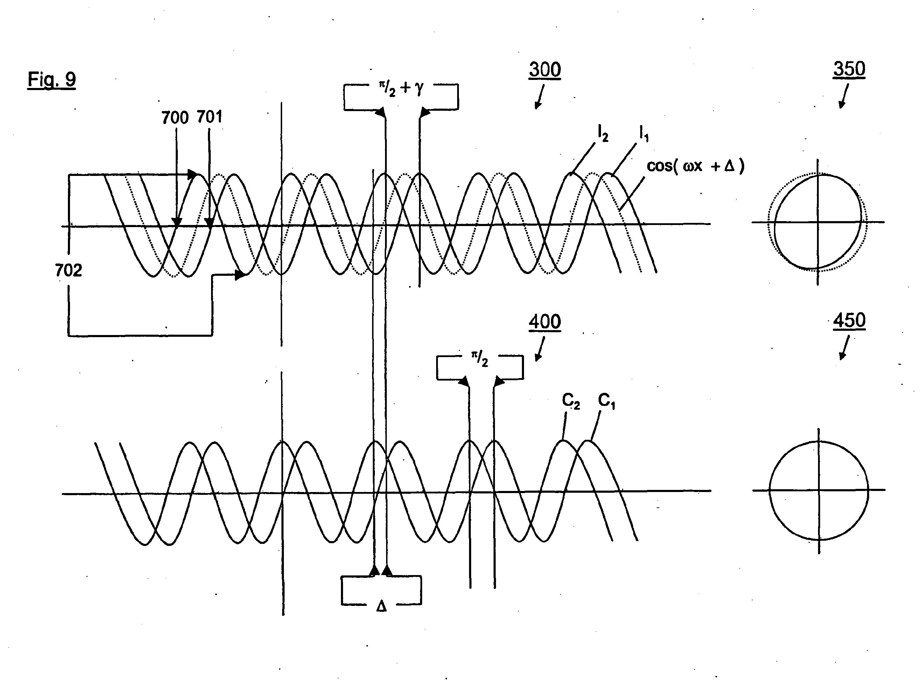

In Figur 8 ist ein erfindungsgemäßes Kalibriersystem 600 dargestellt, in welchem eine nicht kalibrierte Positionssensoreinheit 100 zur Kalibrierung angeordnet ist. Gemeinsam mit einer bereits kalibrierten Positionssensoreinheit 500 reiten die Positionssensoreinheiten 100, 500 entlang zweier Schienen 501 und bewegen dabei ihre Nasen 106 mit den Sensorelementen 107 über eine Maßverkörperung 502. Die Maßverkörperung 502 weist eine durchgängige periodische Markierung 503 zur inkrementellen Positionsmessung gegenüber einer Referenzmarkierung 505 auf, welche einen definierten Abstand gegenüber anderen hier nicht gezeigten Maschinenelementen aufweist. Die beiden Positionssensoreinheiten 100 und 500 weisen bei der Kalibrierung einen Positionsunterschied von $\Delta x$ auf, der dem Kalibriersystem 600 durch entsprechende Parametrisierung bekannt ist. Des Weiteren ist der inverse Periodenabstand $\omega$ der Maßverkörperung 502 dem Kalibriersystem 600 durch Parametrisierung bekannt. Auf der nicht kalibrierten Positionssensoreinheit 100 ist ein Mess- und Widerstandssimulationskopf 510 angeordnet, so dass die Bestückungspunkte 200 (hier durch den Mess- und Widerstandsimulationskopf 510 verdeckt) Kontakt mit dem Mess- und Widerstandsimulationskopf 510 aufweisen. Der Widerstandsimulationskopf 510 überbrückt die Bestückungspunkte 200 mit einem definierten Widerstand, welcher dem Kalibriersystem 600 ebenfalls bekannt ist. Das Kalibriersystem 600 ist durch Verbindungsleitungen 520 und 530 mit den Positionssensoreinheiten 100 und 500 und der darauf angeordneten Elektronik verbunden. Zur Kalibrierung werden die mechanisch gekoppelten Positionssensoreinheiten 100 und 500 über die Schienen 501 bewegt und dabei geben die Sensoreinheit 107 Signale an die Elektronik der Positionssensoreinheiten 100 und 500 und an den Widerstandssimulationskopf 510, welcher auch Signale aufnehmen und an das Kalibriersystem 600 weiterleiten kann. Die Signale $I_1$ und $I_2$ werden in dem Kalibriersystem 600 gemäß Figur 9 vermessen, die Parameter x, $\Delta$ und

γ werden nach oben stehendem Algorithmus bestimmt und die Widerstände zur Bestückung werden nach unten stehender Weise ermittelt. Die berechneten Widerstandswerte werden entweder an eine hier nicht gezeigte vollautomatische Bestückungsmaschine weitergleitet oder zur manuellen Nachbestückung auf einem Bildschirm 601 oder einem ausgedruckten Protokoll ausgegeben.

In Figur 9 sind vier Signaldiagramme 300, 350, 400 und 450 der unkalibrierten Signale $I_1$ und $I_2$, sowie der kalibrierten Signale $C_1$ und $C_2$ dargestellt. Die unkalibrierten Signale $I_1$ und $I_2$ weisen gegenüber den kalibrierten Signalen $C_1$ und $C_2$ einen absoluten Phasenversatz $\Delta$ auf. Der absolute Phasenversatz $\Delta$ wird durch die Referenzmarkierung 505 in Figur 8 ermittelt. Die Positionssensoren in den Sensorelementen 107 zur Detektion der Referenzmarkierung 505 werden als erste Sensoren kalibriert. Darauf folgend werden die Sensorelemente zur Aufnahme des periodischen Signals kalibriert. Dabei misst das Kalibriersystem 600 in Figur 8 zunächst den Abstand der Nulldurchgänge 700 und 701 der beiden Sensoren 1 und 2 in Figur 1 bis 4. Aus diesem Abstand 700-701 und dem Sollabstand, der bei bekannter Geschwindigkeit der Positionssensoreinheiten 100 und 500 bekannt ist, ist beispielweise aus einer Zeitmessung der relative Phasenversatz γ zu ermitteln. Außer einer Zeitmessung kann das Kalibriersystem 600 in alternativer Weise die Elliptizität der korrespondierenden Lissajous-Figur in Diagramm 350 ermitteln. Hierzu wird die Lissajous-Ellipse in Diagramm 350 mit dem gestrichelten Sollkreis in Diagramm 350 verglichen. Die Achslage und die Elliptizität erlauben einen Rückschluss auf die relative Phasenverschiebung γ. Nach der Relativphasenkorrektur gemäß Gleichung **(10)** wird der absolute Phasenversatz $\Delta$ ermittelt. Dieser wird im Vergleich mit den Werten der Positionssensoreinheit 500 in Figur 8 und dem bekannten Parameter $\Delta x$ ermittelt, indem die Position der Positionssensoreinheit 500 auf bekannte Weise ermittelt wird und die Differenz der Position der Positionssensoreinheit 500 und dem Wert $\Delta x$ ist der Sollwert für die Position der Positionssensoreinheit 100. Durch Vergleich der berechneten Position der Positionssensoreinheit 100 mit der berechneten Position aus den Werten der bereits relativphasenkalibrierten Positionssensoreinheit 100 wird der absolute Phasenversatz $\Delta$ ermittelt. Nach Kenntnis der Parameter $\Delta$ und γ wird hierdurch die Bemessung der Widerstände auf der Platine 110 berechnet. Die Signale $I_1$ und $I_2$ werden so zu den kalibrierten Signalen $C_1$ und $C_2$ überlagert. Diese ergeben in einer Lissajous-Auftragung einen perfekten Kreis, sofern der Relativphasenversatz auf $^\pi/_2$ eingestellt wurde. Der absolute Phasenversatz $\Delta$ ist dem Lissajous-Diagramm 450 aufgrund der Kreissymmetrie nicht zu entnehmen, außer das Signal wird zu eindeutig bestimmten Zeiten, beispielsweise bei Nulldurchgang kurz intensitätsvariiert, so dass ein kurzes Kreissegment intensiver als der Rest des Kreises in Diagramm 450 aufleuchtet. Die Amplitude 702 kann gegebenenfalls ebenfalls vom Kalibriersystem 600 ermittelt werden, um aus dieser Information den Gleichspannungsversatz (Bias) und die Symmetrie der Verstärkung der Signalvorverstärker -ebenfalls durch Bemessung von korrespondierenden Komponenten- einzustellen.

Zur Bestimmung der Widerstände in dem beispielhaft gezeigten Phasenmischer wird folgende Berechnung durchgeführt:

Unter Verwendung des Ergebnisses von **(32)** und **(33)** wird die Beaufschlagung der Eingänge $U_1^-$, $U_2^-$, $U_3^+$ und $U_4^+$ mit den Signalen $I_1$ und $I_2$ nach den Vorzeichen der Koeffizienten für $I_1$ und $I_2$ in **(32)** und **(33)** nach folgenden Tabellen bestimmt:

Wahl der Beaufschlagung der Summier-/Subtrahierschaltung 10 zur Erzeugung des kalibrierten Signals $C_1$:

| Koeffizient für $I_1$ | Koeffizient für $I_2$ | $I_1$ | $I_2$ |
|---|---|---|---|
| $\cos(\Delta)\cos^{-1}(\gamma) < 0$ | $[\cos(\Delta)\tan(\gamma) + \sin(\Delta)] < 0$ | $U_1^-$ oder $U_2^-$ | $U_3^+$ oder $U_4^+$ |
| $\cos(\Delta)\cos^{-1}(\gamma) < 0$ | $[\cos(\Delta)\tan(\gamma) + \sin(\Delta)] > 0$ | $U_1^-$ | $U_2^-$ |
| $\cos(\Delta)\cos^{-1}(\gamma) > 0$ | $[\cos(\Delta)\tan(\gamma) + \sin(\Delta)] < 0$ | $U_3^+$ | $U_4^+$ |
| $\cos(\Delta)\cos^{-1}(\gamma) > 0$ | $[\cos(\Delta)\tan(\gamma) + \sin(\Delta)] > 0$ | $U_3^+$ oder $U_4^+$ | $U_1^-$ oder $U_2^-$ |
| $\cos(\Delta)\cos^{-1}(\gamma) > 0$ | $[\cos(\Delta)\tan(\gamma) + \sin(\Delta)] \sim 0$ | $U_3^+$ oder $U_4^+$ | nicht |
| $\cos(\Delta)\cos^{-1}(\gamma) < 0$ | $[\cos(\Delta)\tan(\gamma) + \sin(\Delta)] \sim 0$ | $U_1^-$ oder $U_2^-$ | nicht |

Wahl der Beaufschlagung der Summier-/Subtrahierschaltung 10 zur Erzeugung des kalibrierten Signals $C_2$:

| Koeffizient für $I_1$ | Koeffizient für $I_2$ | $I_1$ | $I_2$ |
|---|---|---|---|
| $\sin(\Delta)\cos^{-1}(\gamma) < 0$ | $[\sin(\Delta)\tan(\gamma) - \cos(\Delta)] < 0$ | $U_1^-$ oder $U_2^-$ | $U_3^+$ oder $U_4^+$ |
| $\sin(\Delta)\cos^{-1}(\gamma) < 0$ | $[\sin(\Delta)\tan(\gamma) - \cos(\Delta)] > 0$ | $U_1^-$ | $U_2^-$ |
| $\sin(\Delta)\cos^{-1}(\gamma) < 0$ | $[\sin(\Delta)\tan(\gamma) - \cos(\Delta)] < 0$ | $U_3^+$ | $U_4^+$ |
| $\sin(\Delta)\cos^{-1}(\gamma) < 0$ | $[\sin(\Delta)\tan(\gamma) - \cos(\Delta)] > 0$ | $U_3^+$ oder $U_4^+$ | $U_1^-$ oder $U_2^-$ |
| $\sin(\Delta)\cos^{-1}(\gamma) \sim 0$ | $[\sin(\Delta)\tan(\gamma) - \cos(\Delta)] > 0$ | nicht | $U_1^-$ oder $U_2^-$ |
| $\sin(\Delta)\cos^{-1}(\gamma) \sim 0$ | $[\sin(\Delta)\tan(\gamma) - \cos(\Delta)] < 0$ | nicht | $U_3^+$ oder $U_4^+$ |
| $\sin(\Delta)\cos^{-1}(\gamma) < 0$ | $[\sin(\Delta)\tan(\gamma) - \cos(\Delta)] \sim 0$ | $U_1^-$ oder $U_2^-$ | nicht |

(fortgesetzt)

| Koeffizient für $I_1$ | Koeffizient für $I_2$ | $I_1$ | $I_2$ |
|---|---|---|---|
| $\sin(\Delta)\cos^{-1}(\gamma) > 0$ | $[\sin(\Delta)\tan(\gamma) - \cos(\Delta)] \sim 0$ | $U_3^+$ oder $U_4^+$ | nicht |

Die Widerstände $R_3$, $R_4$, $R_5$ und $R_6$ sind wie folgt zu bemessen:

Bemessung der Widerstände $R_3$, $R_4$, $R_5$ und $R_6$ in der Summier-/ Subtrahierschaltung 10 zur Erzeugung des kalibrierten Signals $C_1$:

| $I_1$ | Widerstand für $I_1$ |
|---|---|
| $U_1^-$ oder $U_2^-$ | $R_3$ oder $R4 = R_2/|\cos(\Delta)\cos^{-1}(\gamma)|$ |
| $U_1^-$ | $R_3 = R_2/|\cos(\Delta)\cos^{-1}(\gamma)|$ |
| $U_3^+$ | $R_5 = R_1/|\cos(\Delta)\cos^{-1}(\gamma)|$ |
| $U_3^+$ oder $U_4^+$ | $R_5$ oder $R_6 = R_1/|\cos(\Delta)\cos^{-1}\gamma)|$ |

| $I_2$ | Widerstand für $I_2$ |
|---|---|
| $U_3^+$ oder $U_4^+$ + | $R_5$ oder $R_6 = R_1/|\cos(\Delta)\tan(\gamma) + \sin(\Delta)|$ |
| $U_2$ | $R_4 = R_2/|\cos(\Delta)\tan(\gamma) + \sin(\Delta)|$ |
| $U_4^+$ + | $R_6 = R_1/|\cos(\Delta)\tan(\gamma) + \sin(\Delta)|$ |
| $U_1^-$ oder $U_2^-$ | $R_3$ oder $R_4 = R_2/|\cos(\Delta)\tan(\gamma) + \sin(\Delta)|$ |

Bemessung der Widerstände $R_3$, $R_4$, $R_5$ und $R_6$ in der Summier-/ Subtrahierschaltung 10 zur Erzeugung des kalibrierten Signals $C_2$:

| $I_1$ | Widerstand für $I_1$ |
|---|---|
| $U_1^-$ oder $U_2^-$ | $R_3$ oder $R_4 = R_2/\sin(\Delta)\cos^{-1}(\gamma)|$ |
| $U_1^-$ | $R_3 = R_2/|\sin(\Delta)\cos^{-1}(\gamma)|$ |
| $U_3^+$ | $R_5 = R_1/|\sin(\Delta)\cos^{-1}(\gamma)|$ |
| $U_3^+$ oder $U_4^+$ | $R_5$ oder $R_6 = R_1/|\sin(\Delta)\cos^{-1}(\gamma)|$ |

| $I_2$ | Widerstand für $I_2$ |
|---|---|
| $U_3^+$ oder $U_4^+$ + | $R_5$ oder $R_6 = R_1/|\sin(\Delta)\tan(\gamma) + \cos(\Delta)|$ |
| $U_2^-$ | $R_4 = R_2/|\sin(\Delta)\tan(\gamma) + \cos(\Delta)|$ |
| $U_4^+$ + | $R_6 = R_1/|\sin(\Delta)\tan(\gamma) + \cos(\Delta)|$ |
| $U_1^-$ oder $U_2^-$ | $R_3$ oder $R_4 = R_2/|\sin(\Delta)\tan(\gamma) + \cos(\Delta)|$ |

Tabelle1: Faktor $1/|\cos(\Delta)\cos^{-1}(\gamma)|$ zur Berechnung des Widerstands $R_3$, $R_4$, $R_5$ oder $R_6$ für Signal $I_1$ zur Erzeugung von $C_1$

| $\gamma\backslash\Delta$ | -60 | -50 | -40 | -30 | -20 | -10 | 0 | 10 | 20 | 30 | 40 | 50 | 60 |
|---|---|---|---|---|---|---|---|---|---|---|---|---|---|
| **-60** | 1 | 0,778 | 0,653 | 0,577 | 0,532 | 0,508 | 0,5 | 0,508 | 0,532 | 0,577 | 0,653 | 0,778 | 1 |
| **-50** | 1,286 | 1 | 0,839 | 0,742 | 0,684 | 0,653 | 0,643 | 0,653 | 0,684 | 0,742 | 0,839 | 1 | 1,286 |
| **-40** | 1,532 | 1,192 | 1 | 0,885 | 0,815 | 0,778 | 0,766 | 0,778 | 0,815 | 0,885 | 1 | 1,192 | 1,532 |
| **-30** | 1,732 | 1,347 | 1,131 | 1 | 0,922 | 0,879 | 0,866 | 0,879 | 0,922 | 1 | 1,131 | 1,347 | 1,732 |
| **-20** | 1,879 | 1,462 | 1,227 | 1,085 | 1 | 0,954 | 0,94 | 0,954 | 1 | 1,085 | 1,227 | 1,462 | 1,879 |
| **-10** | 1,97 | 1,532 | 1,286 | 1,137 | 1,048 | 1 | 0,985 | 1 | 1,048 | 1,137 | 1,286 | 1,532 | 1,97 |
| **0** | 2 | 1,556 | 1,305 | 1,155 | 1,064 | 1,015 | 1 | 1,015 | 1,064 | 1,155 | 1,305 | 1,556 | 2 |
| **10** | 1,97 | 1,532 | 1,286 | 1,137 | 1,048 | 1 | 0,985 | 1 | 1,048 | 1,137 | 1,286 | 1,532 | 1,97 |
| **20** | 1,879 | 1,462 | 1,227 | 1,085 | 1 | 0,954 | 0,94 | 0,954 | 1 | 1,085 | 1,227 | 1,462 | 1,879 |
| **30** | 1,732 | 1,347 | 1,131 | 1 | 0,922 | 0,879 | 0,866 | 0,879 | 0,922 | 1 | 1,131 | 1,347 | 1,732 |
| **40** | 1,532 | 1,192 | 1 | 0,885 | 0,815 | 0,778 | 0,766 | 0,778 | 0,815 | 0,885 | 1 | 1,192 | 1,532 |
| **50** | 1,286 | 1 | 0,839 | 0,742 | 0,684 | 0,653 | 0,643 | 0,653 | 0,684 | 0,742 | 0,839 | 1 | 1,286 |
| **60** | 1 | 0,778 | 0,653 | 0,577 | 0,532 | 0,508 | 0,5 | 0,508 | 0,532 | 0,577 | 0,653 | 0,778 | 1 |

Tabelle 2: Faktor $1/|\cos(\Delta)\tan(\gamma^*)+\sin(\Delta)|$ zur Berechnung des Widerstands $R_3$, $R_4$, $R_5$ oder $R_6$ für Signal $I_2$ zur Erzeugung von $C_1$

| $\gamma\backslash\Delta$ | -60 | -50 | -40 | -30 | -20 | -10 | 0 | 10 | 20 | 30 | 40 | 50 | 60 |
|---|---|---|---|---|---|---|---|---|---|---|---|---|---|
| **-60** | 0,577 | 0,532 | 0,508 | 0,5 | 0,508 | 0,532 | 0,577 | 0,653 | 0,778 | 1 | 1,462 | 2,879 | *∞* |
| **-50** | 0,684 | 0,653 | 0,643 | 0,653 | 0,684 | 0,742 | 0,839 | 1 | 1,286 | 1,879 | 3,702 | *∞* | 3,702 |
| **-40** | 0,778 | 0,766 | 0,778 | 0,815 | 0,885 | 1 | 1,192 | 1,532 | 2,24 | 4,411 | *∞* | 4,411 | 2,24 |
| **-30** | 0,866 | 0,879 | 0,922 | 1 | 1,131 | 1,347 | 1,732 | 2,532 | 4,987 | *∞* | 4,987 | 2,532 | 1,732 |
| **-20** | 0,954 | 1 | 1,085 | 1,227 | 1,462 | 1,879 | 2,747 | 5,411 | *∞* | 5,411 | 2,747 | 1,879 | 1,462 |
| **-10** | 1,048 | 1,137 | 1,286 | 1,532 | 1,97 | 2,879 | 5,671 | *∞* | 5,671 | 2,879 | 1,97 | 1,532 | 1,286 |
| **0** | 1,155 | 1,305 | 1,556 | 2 | 2,924 | 5,759 | *∞* | 5,759 | 2,924 | 2 | 1,556 | 1,305 | 1,155 |
| **10** | 1,286 | 1,532 | 1,97 | 2,879 | 5,671 | *∞* | 5,671 | 2,879 | 1,97 | 1,532 | 1,286 | 1,137 | 1,048 |
| **20** | 1,462 | 1,879 | 2,747 | 5,411 | *∞* | 5,411 | 2,747 | 1,879 | 1,462 | 1,227 | 1,085 | 1 | 0,954 |
| **30** | 1,732 | 2,532 | 4,987 | *∞* | 4,987 | 2,532 | 1,732 | 1,347 | 1,131 | 1 | 0,922 | 0,879 | 0,866 |
| **40** | 2,24 | 4,411 | *∞* | 4,411 | 2,24 | 1,532 | 1,192 | 1 | 0,885 | 0,815 | 0,778 | 0,766 | 0,778 |
| **50** | 3,702 | *∞* | 3,702 | 1,879 | 1,286 | 1 | 0,839 | 0,742 | 0,684 | 0,653 | 0,643 | 0,653 | 0,684 |
| **60** | *∞* | 2,879 | 1,462 | 1 | 0,778 | 0,653 | 0,577 | 0,532 | 0,508 | 0,5 | 0,508 | 0,532 | 0,577 |

Tabelle 3: Faktor $1/|\sin(\gamma)\cos^{-1}(\gamma)|$ zur Berechnung des Widerstands $R_3$, $R_4$, $R_5$ oder $R_6$ für Signal $I_1$ zur Erzeugung von $C_2$

| $\gamma\backslash\Delta$ | -60 | -50 | -40 | -30 | -20 | -10 | 0 | 10 | 20 | 30 | 40 | 50 | 60 |
|---|---|---|---|---|---|---|---|---|---|---|---|---|---|
| -60 | 0,577 | 0,653 | 0,778 | 1 | 1,462 | 2,879 | *∞* | 2,879 | 1,462 | 1 | 0,778 | 0,653 | 0,577 |
| -50 | 0,742 | 0,839 | 1 | 1,286 | 1,879 | 3,702 | *∞* | 3,702 | 1,879 | 1,286 | 1 | 0,839 | 0,742 |
| -40 | 0,885 | 1 | 1,192 | 1,532 | 2,24 | 4,411 | *∞* | 4,411 | 2,24 | 1,532 | 1,192 | 1 | 0,885 |
| -30 | 1 | 1,131 | 1,347 | 1,732 | 2,532 | 4,987 | *∞* | 4,987 | 2,532 | 1,732 | 1,347 | 1,131 | 1 |
| -20 | 1,085 | 1,227 | 1,462 | 1,879 | 2,747 | 5,411 | *∞* | 5,411 | 2,747 | 1,879 | 1,462 | 1,227 | 1,085 |
| -10 | 1,137 | 1,286 | 1,532 | 1,97 | 2,879 | 5,671 | *∞* | 5,671 | 2,879 | 1,97 | 1,532 | 1,286 | 1,137 |
| 0 | 1,155 | 1,305 | 1,556 | 2 | 2,924 | 5,759 | *∞* | 5,759 | 2,924 | 2 | 1,556 | 1,305 | 1,155 |
| 10 | 1,137 | 1,286 | 1,532 | 1,97 | 2,879 | 5,671 | *∞* | 5,671 | 2,879 | 1,97 | 1,532 | 1,286 | 1,137 |
| 20 | 1,085 | 1,227 | 1,462 | 1,879 | 2,747 | 5,411 | *∞* | 5,411 | 2,747 | 1,879 | 1,462 | 1,227 | 1,085 |
| 30 | 1 | 1,131 | 1,347 | 1,732 | 2,532 | 4,987 | *∞* | 4,987 | 2,532 | 1,732 | 1,347 | 1,131 | 1 |
| 40 | 0,885 | 1 | 1,192 | 1,532 | 2,24 | 4,411 | *∞* | 4,411 | 2,24 | 1,532 | 1,192 | 1 | 0,885 |
| 50 | 0,742 | 0,839 | 1 | 1,286 | 1,879 | 3,702 | *∞* | 3,702 | 1,879 | 1,286 | 1 | 0,839 | 0,742 |
| 60 | 0,577 | 0,653 | 0,778 | 1 | 1,462 | 2,879 | *∞* | 2,879 | 1,462 | 1 | 0,778 | 0,653 | 0,577 |

Tabelle 4: Faktor $1/|\sin(\Delta)\tan(\gamma) - \cos(\Delta)|$ zur Berechnung des Widerstands $R_3$, $R_4$, $R_5$ oder $R_6$ für Signal $I_2$ zur Erzeugung von $C_2$

| $\gamma\backslash\Delta$ | -60 | -50 | -40 | -30 | -20 | -10 | 0 | 10 | 20 | 30 | 40 | 50 | 60 |
|---|---|---|---|---|---|---|---|---|---|---|---|---|---|
| -60 | 1 | 1,462 | 2,879 | *∞* | 2,879 | 1,462 | 1 | 0,778 | 0,653 | 0,577 | 0,532 | 0,508 | 0,5 |
| -50 | 1,879 | 3,702 | *∞* | 3,702 | 1,879 | 1,286 | 1 | 0,839 | 0,742 | 0,684 | 0,653 | 0,643 | 0,653 |
| -40 | 4,411 | *∞* | 4,411 | 2,24 | 1,532 | 1,192 | 1 | 0,885 | 0,815 | 0,778 | 0,766 | 0,778 | 0,815 |
| -30 | *∞* | 4,987 | 2,532 | 1,732 | 1,347 | 1,131 | 1 | 0,922 | 0,879 | 0,866 | 0,879 | 0,922 | 1 |
| -20 | 5,411 | 2,747 | 1,879 | 1,462 | 1,227 | 1,085 | 1 | 0,954 | 0,94 | 0,954 | 1 | 1,085 | 1,227 |
| -10 | 2,879 | 1,97 | 1,532 | 1,286 | 1,137 | 1,048 | 1 | 0,985 | 1 | 1,048 | 1,137 | 1,286 | 1,532 |
| 0 | 2 | 1,556 | 1,305 | 1,155 | 1,064 | 1,015 | 1 | 1,015 | 1,064 | 1,155 | 1,305 | 1,556 | 2 |
| 10 | 1,532 | 1,286 | 1,137 | 1,048 | 1 | 0,985 | 1 | 1,048 | 1,137 | 1,286 | 1,532 | 1,97 | 2,879 |
| 20 | 1,227 | 1,085 | 1 | 0,954 | 0,94 | 0,954 | 1 | 1,085 | 1,227 | 1,462 | 1,879 | 2,747 | 5,411 |
| 30 | 1 | 0,922 | 0,879 | 0,866 | 0,879 | 0,922 | 1 | 1,131 | 1,347 | 1,732 | 2,532 | 4,987 | *∞* |
| 40 | 0,815 | 0,778 | 0,766 | 0,778 | 0,815 | 0,885 | 1 | 1,192 | 1,532 | 2,24 | 4,411 | *∞* | 4,411 |
| 50 | 0,653 | 0,643 | 0,653 | 0,684 | 0,742 | 0,839 | 1 | 1,286 | 1,879 | 3,702 | *∞* | 3,702 | 1,879 |
| 60 | 0,5 | 0,508 | 0,532 | 0,577 | 0,653 | 0,778 | 1 | 1,462 | 2,879 | *∞* | 2,879 | 1,462 | 1 |

Die unterschiedlichen Faktorbetragtabellen weisen in einigen Spalten und diagonal verlaufenden Spuren Polstellen auf, an denen der zu berechnende Wert gegen einen unendlichen Betrag strebt. An diesen Stellen in Tabelle 2 hebt sich der Relativphasenversatz und der absolute Phasenversatz des Signals $I_1$ auf. Korrespondierend dazu steht an den entsprechenden Stellen der Tabellen ein Wert $\infty$ in Tabelle 2 einem Wert 1 in Tabelle 1 gegenüber, gleichbedeutend unendlicher Widerstand oder kein Anteil des Signals $I_2$ am überlagerten Signal $C_1$ und ein Linearfaktor von genau 1 für das Signal $I_1$ am überlagerten Signal $C_1$. Entsprechend der anderen Symmetrie der Signalüberlagerung für Signal $C_2$ weist die Tabelle 3 dort eine Polstelle auf, an welcher der zu berichtigende Wert $\Delta$ den Zahlenwert Null aufweist. An entsprechender Stelle in Tabelle 3 steht der Zahlenwert $\infty$ gleichbedeutend einem Anteil von Null für Signal $I_1$ am überlagerten Signal $C_2$. An den Stellen in Tabelle 4, an denen durch den Relativphasenversatz $\gamma$ und durch den absoluten Phasenversatz $\Delta$ das unkalibrierte Signal $I_1$ mit dem kalibrierten Signal $C_2$ zusammenfällt, wird $C_2$ ausschließlich durch das unkalibrierte Signal $I_1$, das zufällig dem kalibrierten Signal $C_2$ entspricht, zur Verfügung gestellt. An diesen Stellen summiert sich $\Delta$ und $\gamma$ auf 90° oder $\pi/2$. Für diese Kalibrierpositionen bedeutet dies, dass entsprechend der oben stehenden Tabellen zur Wahl der Beaufschlagung der Phasenmischereingänge der Phasenmischer als reiner Spannungsfolger oder Invertierer geschaltet wird, gleichbedeutend, dass für den infinitesimal geringen Anteil des Signals, gleichbedeutend hoher Widerstandswertfaktor in den Tabellen, dieses Signal nicht durch den Phasenmischer geführt wird. Befinden sich die Winkelparameter des zu kalibrierenden Signals in der Nähe der Polstellen, ist es praktikabel, ab einem Grenzwert auf die Überlagerung zu verzichten. Der hierdurch in Kauf genommene Kalibrierfehler ist dann korrespondierend mit dem Grenzwert Koeffizient($I_1$)/Koeffizient($I_2$) entsprechend klein. Des Weiteren variiert der relative Phasenversatz $\gamma$ mit erheblich geringerer Standardabweichung als der absolute Phasenversatz $\Delta$ und wird dominiert vom relativen Phasenversatz $\gamma$, der durch das Verhältnis des Sensorabstandes und der Maßverkörperungsperiodenlänge vorgegeben ist. Beträgt beispielsweise der mittlere Periodenabstand der Maßverkörperung etwa das vierfache des mittleren Abstands der korrespondierenden Sensoren, so variiert der relative Phasenversatz $\gamma$ in der Nähe von $\pi/2$, (gleich ein viertel einer vollen Periode $2\pi$) mit einer weit geringeren Standardabweichung als der absolute Phasenversatz $\Delta$, da die Variation des relativen Phasenversatzes $\gamma$ mit dem Sinus des Winkels zwischen lateraler Bewegungsrichtung der Maßverkörperung zur Richtung Sensor-zu-Senosor und der Positioniergenauigkeit der einzelnen Sensoren auf dem Substrat variiert. So ist es möglich, innerhalb der einhaltbaren Platzierungstendenzen polstellenfreie Fenster in den oben dargestellten Tabellen zu wählen, innerhalb derer die Winkelparameter der zu kalibrierenden Sensoren variieren, ohne dabei Polstellen zu überstreichen.

Die Bestimmung der Widerstandswerte für einen Phasenmischer zur erfindungsgemäßen elektronischen Kalibrierung von Positionssensoren wurde anhand eines gattungsgemäßen Operationsverstärkers in einer kombinierten Summierer/Subtrahierer-Beschaltung dargelegt. Dem Fachmann ist es überlassen, alternative Analogschaltungen, die zu einer analogen Überlagerung von Signalen führt, auszuwählen und die Berechnung zur Bemessung von elektronischen Komponenten entsprechend anzupassen. So ist es ebenfalls möglich, die Signale mit einer Schaltung aus konkreten elektronischen Einzelbausteinen aufzubauen oder auch einen integrierten Schaltkreis, beispielsweise einen digitalen Signalprozessor (DSP) zur Überlagerung zu verwenden. Im letzteren Fall wird das analoge Signal im DSP zur arithmetischen Wandlung digitalisiert und nach Wandlung wieder in ein analoges Signal zurückgeführt. Es ist auch möglich, die digitalen Informationen aus dem DSP auszulesen.

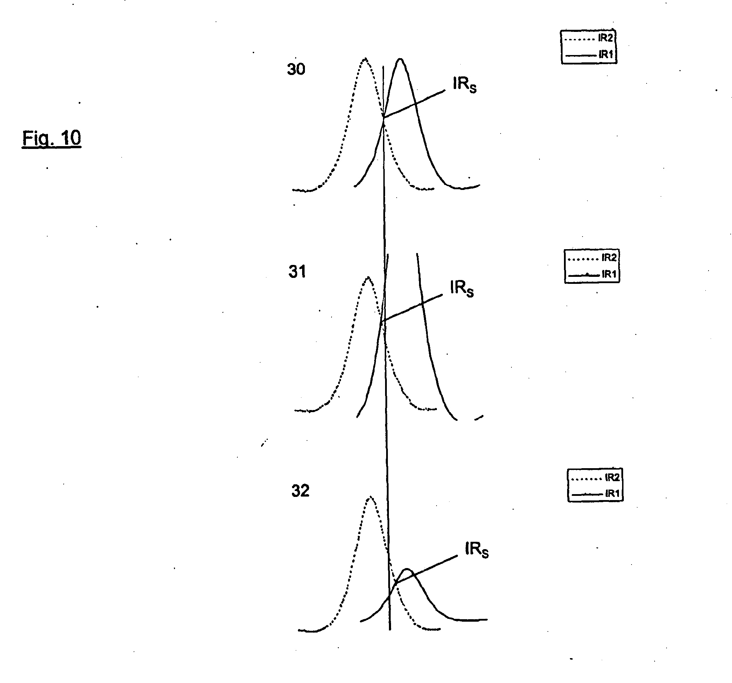

In Figur 10 sind drei Signaldiagramme 30, 31 und 32 zweier unkalibrierter Referenzsignale $IR_1$ und $IR_2$ abgebildet. Der Schnittpunkt $IR_s$ beider Signale $IR_1$ und $IR_2$ dient als Referenzpunkt zur Berechnung der Position zweier weiterer Sensoren, die periodisch durch eine Maßverkörperung 502 erregt werden. Dieser Schnittpunkt $IR_S$ je zweier Sensorsignale $IR_1$, $IR_2$ wird durch Verstärkung oder Abschwächung eines der beiden Signale, im vorliegenden Falle $IR_1$, verschoben und somit bietet sich die Möglichkeit der Verschiebung des Referenzpunktes $IR_s$, mit dessen Hilfe sich die inkrementelle Position weiterer periodisch erregter Sensoren ermitteln lässt. Die beiden Referenzsignale $IR_1$, $IR_2$ werden durch eine einzelne Markierung 505 in einer Maßverkörperung 502 in der Positionssensoreinheit 100 an korrespondierenden Sensoren erzeugt. Die Referenzsignale in den drei Signaldiagrammen $IR_1$ und $IR_2$ sind nicht periodisch, weil diese durch eine einzelne Referenzmarkierung 505 in einer Maßverkörperung 502 erzeugt werden. Obwohl die Signalform in den Signaldiagrammen 30, 31 und 32 so aussieht, als handele es sich um je zwei Gauss-Glockenkurvenähnliche Verläufe, so handelt es sich hierbei tatsächlich um zwei Kurven, die in ihren Extrempunkten eher einer Sinus-/Cosinusform ähneln als einer Gauss-Glockenkurve. Da die Signale $IR_1$ und $IR_2$ nicht periodisch sind, diese aber auf dem gleichen Wege wie die periodischen Signale erzeugt werden, handelt es sich bei diesen Referenzsignalen $IR_1$, $IR_2$ um Ausschnitte je einer periodischen Sinus-/Cosinusfunktion. Die Ausläufer des Signals links und rechts zu den Extrempunkten ähneln eher einer gefalteten Sinus-/Cosinusfunktion ähnlich $\sin(x)/x^2$ oder $\cos(x)/(x-a)^2$. Die Bestimmung des Referenzpunktes wird vorzugsweise so durchgeführt, dass beide Signale $IR_1$ und $IR_2$ einen sowohl von Null verschiedenen als auch einen gleichen Wert aufweisen. Sofern es sich bei den Signalen in der Nähe der Extrempunkte um Ausschnitte einer Sinus-/Cosinusfunktion handelt, liegt am Schnittpunkt der beiden Signale $IR_1$ und $IR_2$ ein Winkel von $\pi/4$ vor. Die Lage dieses Punktes $IR_s$ kann durch Variation der Amplitude je eines Signals $IR_1$ oder $IR_2$ innerhalb der Grenzen, in denen die Signale $IR_1$ und $IR_2$ je einer Sinus-/Cosinusfunktion ähneln, verschoben werden. Über diesen Bereich hinaus ist eine Verschiebung ebenfalls möglich, jedoch folgt die Verschiebung hier anderen als unten erläuterten Beziehungen. Wird die Amplitude eines Signals $IR_1$ oder $IR_2$ angehoben beziehungsweise abgesenkt, so verschiebt sich somit auch der Schnittpunkt $IR_s$, an denen der Funktionswert $\pi/4$ angenommen werden kann. Entsprechend ist hierdurch die Lage des Referenzpunkts $IR_s$ einstellbar.

Die Verschiebung des Referenzpunktes $IR_s$ in ist mit der Verstärkung oder Abschwächung eines der beiden Signale wie folgt gekoppelt:

Am Schnittpunkt der beiden Signale gilt:

$$\sin(\omega x) = \cos(\omega x) \tag{41}$$

gleichbedeutend mit

$$\omega x = \arctan(\sin(\omega x) / \cos(\omega x)) = \arctan(1) = \pi/4 \tag{42}$$

Wird die Amplitude eines der beiden Signale um den Faktor a verändert, gleichbedeutend mit der Verstärkung (a>1) oder Abschwächung (a<1), so verschiebt sich der Schnittpunkt $IR_s$.

Unter Anwendung der gültigen Beziehung:

$$k_1 \sin(\omega x) + k_2 \cos(\omega x) = \sqrt{k_1^2 + k_2^2} \sin(\omega x + \mathrm{atan}[k_1 / k_2]) \tag{43}$$

und Gleichung (42) mit Faktor a und Schnittpunktsverschiebung $\varphi$:

$$\frac{a\sin(\omega x + \varphi)}{\cos(\omega x)} = 1 \tag{44}$$

und Anwendung der trigonometrischen Identität (3) auf (44)

$$\frac{a\sin(\omega x + \varphi)}{\cos(\omega x)} = \frac{a\sin(\omega x)\cos(\varphi) + a\cos(\omega x)\sin(\varphi)}{\cos(\omega x)} \tag{45}$$

und Vereinfachung von (45):

$$\frac{a\sin(\omega x + \varphi)}{\cos(\omega x)} = a\cos(\varphi) + a\sin(\varphi)$$

$$\tag{46}$$

wobei entsprechend (42) $\sin(\omega x) / \cos(\omega x) = 1$ gesetzt wurde, gilt

$$a\cos(\varphi) + a\sin(\varphi) = 1. \tag{47}$$

Auflösung nach $\varphi$ ergibt unter Berücksichtigung von (43):

$$\sqrt{2a^2}\, \sin(\, \varphi + \mathrm{atan}[\,1\,]\,) = 1 \qquad\qquad \textbf{(48)}$$

$$\varphi = \arcsin\left(\frac{1}{\sqrt{2a^2}}\right) - \frac{\pi}{4} \qquad\qquad \textbf{(49)}$$

Für einen Verstärkungsfaktor von a = 1, also keine Verstärkung oder Abschwächung, berechnet sich φ zu Null, gleichbedeutend keine Verschiebung des

Schnittpunktes. Für einen Verstärkungsfaktor von a = 2 berechnet sich φ zu ca. -24° und für einen Verstärkungsfaktor von a = 0,9 berechnet sich φ zu ca. +6,7°. Die untere Grenze für den Verstärkungs- oder Abschwächungsfaktor a liegt bei a = √2/2 (ca. 0,707). Für den Verstärkungsfaktor am unteren Grenzpunkt beträgt die Verschiebung φ = +45°. Nach oben ist der Verstärkungsfaktor a unbegrenzt. Im Extremfall eines großen Verstärkungsfaktors bedeutet dies, dass sich φ zu -45° berechnet.

Deutlich ist Figur 10 zu entnehmen, dass in Signaldiagramm 31 die Amplitude des Signals $IR_1$ gegenüber der Amplitude in Signaldiagramm 30 verstärkt ist und somit der Schnittpunkt $IR_S$ in Signaldiagramm 31 nach links gegenüber dem Schnittpunkt $IR_S$ in Signaldiagramm 30 verschoben ist. In Signaldiagramm 32 ist die Amplitude $IR_1$ gegenüber der Amplitude in Signaldiagramm 30 abgeschwächt, womit sich der Schnittpunkt $IR_S$ entsprechend zur anderen Seite verschiebt.

Der Schnittpunkt $IR_S$ kann also durch Variation des Verstärkungsfaktors a eines der beiden Signale $IR_1$ oder $IR_2$ in einem Bereich von 90° variiert werden. Bei der Verwendung einer einzelnen Referenzmarkierung, die in Gauss-Glockenkurven-ähnlichen Funktionen an den Sensorausgängen resultiert, ist dem vollen Variationsbereich jedoch eine Grenze gesetzt. Diese ist dann erreicht, wenn der Schnittpunkt $IR_S$ beider Signale $IR_1$ und $IR_2$ einen kritischen Signalwert unterschreitet, der von der Auswerteelektronik nicht eindeutig als von Null verschieden sicher erkannt wird. Zwar ist ein sehr geringes Sensorsignal prinzipiell detektierbar, ein Signalrauschen limitiert jedoch die untere Detektionsgrenze.

Der zu Figur 10 diskutierte Zusammenhang zwischen Verstärkungsfaktor a und Verschiebung φ des Schnittpunktes ist nur gültig für den Bereich, in dem die Kurven einer Sinus-/Cosinusfunktion folgen. In dem Bereich darüber hinaus ist ebenfalls durch Variation eines Verstärkungsfaktors der Schnittpunkt beider Signale einstellbar, jedoch folgt dieser dann einem anderen formularen Zusammenhang.

**Bezugszeichenliste**

| | |
|---|---|
| Δ | absoluter Phasenversatz |
| γ | relativer Phasenversatz |
| ω | inverse Periodenlänge |
| x | Positionsangabe |
| $I_1$ | Signal, unkalibriert |
| $I_2$ | Signal, unkalibriert |
| $C_1$ | Signal, kalibriert |
| $C_2$ | Signal, kalibriert |
| $IR_1$ | Referenzsignal, unkalibriert |
| $IR_2$ | Referenzsignal, unkalibriert |
| $IR_S$ | Schnittpunkt |
| $CR_1$ | Referenzsignal, kalibriert |
| $CR_2$ | Referenzsignal, kalibriert |
| $A_1$ | Operationsverstärker |
| $IC_1$ | Integrierter Schaltkreis |
| $IC_2$ | Integrierter Schaltkreis |
| $R_1$ | Widerstand |
| $R_2$ | Widerstand |
| $R_3$ | Widerstand |
| $R_4$ | Widerstand |
| $R_5$ | Widerstand |

R$_6$      Widerstand
P$_3$      Potentiometer
P$_4$      Potentiometer
P$_5$      Potentiometer
P$_6$      Potentiometer

U$_{ref.}$   Referenzpotential
U$^+$     Versorgungsspannung (+)
U$^-$     Versorgungsspannung (-)
U$_1^-$     Eingang
U$_2^-$     Eingang
U$_3^+$     Eingang
U$_4^+$     Eingang

1      Sensor
2      Sensor
3      Signal, unkalibriert
4      Signal, unkalibriert
10     Summier-/Subtrahierschaltung
11     Ausgang
12     Eingang
13     Eingang
15     optionale elektrische Verbindung
16     optionale elektrische Verbindung
17     optionale elektrische Verbindung
18     optionale elektrische Verbindung
20     Summier-/Subtrahierschaltung
30     Signaldiagramm
31     Signaldiagramm
32     Signaldiagramm
100    Positionssensoreinheit
101    Maschinenelement
102    Befestigungsanordnung
103    Befestigungsanordnung
104    Befestigungsanordnung
105    Befestigungsanordnung
106    Nase
107    Sensorelement
108    Verbindungsleitungen
110    Platine
120    Signalleitung
200    Bestückungspunkte

300    Signaldiagramm
350    Signaldiagramm
400    Signaldiagramm
450    Signaldiagramm
500    Positionssensoreinheit
501    Schiene
502    Maßverkörperung
503    Markierungen
505    Referenzmarkierung
510    Widerstandssimulationskopf
520    Verbindungsleitung
530    Verbindungsleitung

600    Kalibriersystem
601    Bildschirm

700    Nulldurchgang
701    Nulldurchgang
702    Amplitude

**Patentansprüche**

1. Verfahren zur elektronischen Kalibrierung einer Positionssensoreinheit (100) in Abhängigkeit von der mechanischen Stellung zu einer Maßverkörperung (502), die mindestens zwei phasenversetzte periodische Signale (3, 4, $I_1$, $I_2$) und gegebenenfalls zwei phasenversetzte Referenzsignale ($IR_1$, $IR_2$, $CR_1$, $CR_2$) zur Positionsbestimmung erzeugt, **gekennzeichnet durch** eine gleichzeitige individuelle elektronische Überlagerung je zweier unkalibrierter Signale (3, 4, $I_1$, $I_2$) zu je zwei neuen kalibrierten Signalen ($C_1$, $C_2$) zur Kalibrierung von absoluten und relativen Phasenfehlern.

2. Verfahren nach Anspruch 1, **gekennzeichnet durch** eine analogelektronische Überlagerung der unkalibrierten Signale (3, 4, $I_1$, $I_2$).

3. Verfahren nach Anspruch 1 oder 2, **gekennzeichnet durch** die Einstellung eines individuellen Widerstandsverhältnisses zweier Widerstände ($R_1$, $R_2$, $R_3$, $R_4$, $R_5$, $R_6$, $P_3$, $P_4$, $P_5$, $P_6$) an den beiden Eingängen (12, 13) eines Phasenmischers (10, $IC_2$) zur analogelektronischen Überlagerung der unkalibrierten Sensorsignale (3, 4, $I_1$, $I_2$).

4. Verfahren nach Anspruch 3, **gekennzeichnet durch** die individuelle Einstellung je eines Rückkopplungsgrades an den Ein- und Ausgängen einer Signalverstärkeranordnung ($IC_1$) zur Verstärkung oder Erzeugung der unkalibrierten Sensorsignale (3, 4, $I_1$, $I_2$) und Beaufschlagung des Phasenmischers (10, $IC_2$) mit den Ausgangssignalen der Signalverstärkeranordnung ($IC_1$).

5. Verfahren nach Anspruch 3 oder 4, **gekennzeichnet durch** die Verwendung von Potentiometern ($P_3$, $P_4$, $P_5$, $P_6$), Trimmern ($P_3$, $P_4$, $P_5$, $P_6$), Widerstandsdekaden ($R_3$, $R_4$, $R_5$, $R_6$), einzelnen Widerständen ($R_3$, $R_4$, $R_5$, $R_6$) oder digitalen Potentiometern ($P_3$, $P_4$, $P_5$, $P_6$) zur Einstellung des Widerstandsverhältnis.

6. Verfahren nach einem der Ansprüche 2 bis 5, **gekennzeichnet durch** die Einstellung des Verstärkungsfaktors je einer Signalvorverstärkerstufe ($IC_1$) vor einem fest eingestellten Phasenmischer (10, $IC_2$).

7. Verfahren nach einem der Ansprüche 2 bis 6, **gekennzeichnet durch** die Einstellung des Widerstands-, Rückkopplungs- oder Verstärkungsverhältnisses mit Hilfe eines Oszilloskops, wobei die Ausgänge je zweier Phasenmischer (10, $IC_2$) zwei senkrecht zueinander stehende Achsen des Oszilloskops treiben und die Widerstände ($R_1$, $R_2$, $R_3$, $R_4$, $R_5$, $R_6$, $P_3$, $P_4$, $P_5$, $P_6$) solange variiert werden, bis die Form der **durch** die kalibrierten Signale ($C_1$, $C_2$) erzeugten Lissajous-Figuren (350, 450) bei realitätsnaher Erregung der Sensoren (1, 2, 107) der Sollform (450) entspricht.

8. Verfahren nach einem der Ansprüche 3 bis 7, **gekennzeichnet durch** die Einstellung des Widerstands-, Rückkopplungs- oder Verstärkungsverhältnisses mit Hilfe eines Rechners (600) mit einer elektronischen Signalmessanordnung (510), wobei je ein Ausgang der Phasenmischer (10, $IC_2$) je einen Messeingang (520) des Rechners (600) mit einem Sensorausgangssignal (3, 4, $I_1$, $I_2$) beaufschlagt und der Rechner (600) aus den gemessenen Signalen (3, 4, $I_1$, $I_2$) die optimalen Werte der Linearfaktoren, vorzugsweise die berechneten Eigenschaften der zu bemessenden Elektronikkomponenten ($R_1$, $R_2$, $R_3$, $R_4$, $R_5$, $R_6$, $P_3$, $P_4$, $P_5$, $P_6$), berechnet und ausgibt.

**9.** Verfahren nach Anspruch 8,
**gekennzeichnet durch**
die Verwendung eines Kalibriersystems (600) mit mindestens einer zusätzlichen Widerstandsimulationseinheit (510), wobei die Widerstandsimulationseinheit (510) in Kontakt mit den Bestückungspunkten (200) einer unvollständig bestückten Phasenmischerplatine (110) der Maschineneinheit (100) gebracht wird und die Sensoreinheit (107) realitätsnah erregt wird, wobei die Erregungseinheit (501, 502) zusätzliche Sollparameter dem Kalibriersystem (600) übergibt und das Kalibriersystem (600) aus dem zu Anfangs an der Widerstandsimulationseinheit (510) eingestellten Widerstand, den zusätzlichen Parametern und den gemessenen unkalibrierten Signalen ($I_1$, $I_2$, 3, 4) nach einem vorgegebenen Algorithmus die Eigenschaften der auf der Phasenmischerplatine (110) fehlenden Bauteile ($R_1$, $R_2$, $R_3$, $R_4$, $R_5$, $R_6$, $P_3$, $P_4$, $P_5$, $P_6$) so berechnet und ausgibt, dass die kalibrierten Sensorsignale ($C_1$, $C_2$) bei Verwendung der nach Rechnerausgabe berechneten Bauteile ($R_1$, $R_2$, $R_3$, $R_4$, $R_5$, $R_6$, $P_3$, $P_4$, $P_5$, $P_6$) der Sollform (450) entsprechen.

**10.** Verfahren nach Anspruch 9,
**gekennzeichnet durch**
die Verwendung eines digitalen Potentiometers ($P_3$, $P_4$, $P_5$, $P_6$) anstelle der Widerstandssimulationseinheit (510), wobei das digitale Potentiometer ($P_3$, $P_4$, $P_5$, $P_6$) im in die Verstärkerplatine (110) eingebauten Zustand variiert wird.

**11.** Verfahren nach einem der Ansprüche 1 bis 10,
**gekennzeichnet durch**
die Bestimmung der Linearfaktoren zur Überlagerung der unkalibrierten Sensorsignale (3, 4 $I_1$, $I_2$) nach

$$\begin{bmatrix} C_1 \\ C_2 \end{bmatrix} = \begin{bmatrix} \cos(\Delta) & -\sin(\Delta) \\ \sin(\Delta) & \cos(\Delta) \end{bmatrix} \begin{bmatrix} \cos(\gamma)^{-1} & -\tan(\gamma) \\ 0 & 1 \end{bmatrix} \begin{bmatrix} I_1 \\ I_2 \end{bmatrix}$$

wobei $C_1$ für ein erstes kalibriertes Signal, $C_2$ für ein zweites kalibriertes Signal, $I_1$ für ein erstes unkalibriertes Signal und $I_2$ für ein zweites unkalibriertes Signal steht, $\Delta$ für den Phasenversatz gegenüber einer externen Referenz und $\gamma$ für den Unterschied zwischen relativer Soll- und Ist-Phasenverschiebung steht und die Linearfaktoren gleich den ausmultiplizierten Termen aufweisend trigonometrische Funktionen von den Konstanten $\Delta$ und $\gamma$ sind.

**12.** Verfahren nach Anspruch 1 bis 10,
**gekennzeichnet durch**
die Bestimmung der Linearfaktoren zur Überlagerung der unkalibrierten Sensorsignale (3, 4 $I_1$, $I_2$) nach

$$C_1 = \cos(\Delta)\cos^{-1}(\gamma)\, I_1 - [\cos(\Delta)\tan(\gamma) + \sin(\Delta)]\, I_2$$
$$C_2 = \sin(\Delta)\cos^{-1}(\gamma)\, I_1 - [\sin(\Delta)\tan(\gamma) - \cos(\Delta)]\, I_2$$

wobei $C_1$ für ein erstes kalibriertes Signal, $C_2$ für ein zweites kalibriertes Signal, $I_1$ für ein erstes unkalibriertes Signal und $I_2$ für ein zweites unkalibriertes Signal steht, $\Delta$ für den Phasenversatz gegenüber einer externen Referenz und $\gamma$ für den Unterschied zwischen relativer Soll- und Ist-Phasenverschiebung steht und die Linearfaktoren gleich den ausmultiplizierten Termen aufweisend trigonometrische Funktionen von den Konstanten $\Delta$ und $\gamma$ sind.

**13.** Verfahren nach Anspruch 9 oder 10,
**gekennzeichnet durch**
die Verwendung eines automatisierten Kalibriersystems (600), in welchem eine zu kalibrierende Sensoreinheit (107) im in ein Maschinenelement (100) aufgenommen und realitätsnah erregt wird und in welchem aus dem Vergleich von Erregungsdaten in Abhängigkeit einer Feinpositionierung des Maschinenelements (100) charakterisierende Messgrößen des periodischen Signals (3, 4, $I_1$, $I_2$) ermittelt werden, wie beispielsweise Nulldurchgänge (700, 701) und maximale und minimale Signalamplituden (702), aus diesen charakterisierenden Messgrößen die tatsächliche relative und absolute Phasenverschiebung ($\gamma$, $\Delta$) bestimmt und ein Idealwert für die zu variierenden Elektronik-Komponenten ($R_1$, $R_2$, $R_3$, $R_4$, $R_5$, $R_6$, $P_3$, $P_4$, $P_5$, $P_6$) berechnet wird.

**14.** Verfahren nach Anspruch 10,
**gekennzeichnet durch**
die zusätzliche automatische Einstellung der zu variierenden Elektronikkomponente ($P_3$, $P_4$, $P_5$, $P_6$) **durch** das Kalibriersystem (600).

**15.** Verfahren nach Anspruch 1,
**gekennzeichnet durch**
eine digitalelektronische Überlagerung der unkalibrierten Signale (3, 4, $I_1$, $I_2$).

**16.** Verfahren nach Anspruch 1 oder 15,
**gekennzeichnet durch**
Analog/Digitalwandlung der unkalibrierten Sensorsignale (3, 4, $I_1$, $I_2$) und anschließender Überlagerung der Signale (3, 4, $I_1$, $I_2$) in einer arithmetischen Einheit.

**17.** Verfahren nach einem der Ansprüche 15 bis 16, **gekennzeichnet durch**
eine anschließende Rücktransformation des digitalen Signals in ein Analogsignal.

**18.** Verfahren nach einem der Ansprüche 15 bis 17,
**gekennzeichnet durch**
die Verwendung eines digitalen Signalprozessors (DSP) zur Überlagerung der unkalibrierten Signale (3, 4, $I_1$, $I_2$).

**19.** Verfahren nach einem der Ansprüche 1 bis 18,
**gekennzeichnet durch**
die Kalibrierung des Schnittpunktes ($IR_S$) zweier Referenzsignale ($IR_1$, $IR_2$) durch Variation des Amplitudenverhältnisses der Referenzsignale ($IR_1$, $IR_2$).

**20.** Sensoreinheit (110) zur Bestimmung einer linearen oder rotatorischen Position eines Maschinenelements (100) in welcher mindestens zwei Sensoren (1, 2) zwei relativ zueinander phasenversetzte Signale (3, 4, $I_1$, $I_2$) in Abhängigkeit der Erregung durch einen Geber (502) erzeugen,
**dadurch gekennzeichnet,**
**dass** die Sensoreinheit (110) eine Schaltungsanordnung (10, $IC_2$) zur Überlagerung von je zwei unkalibrierten Sensorsignalen (3, 4, $I_1$, $I_2$) zu zwei kalibrierten Sensorsignalen ($C_1$, $C_2$) aufweist.

**21.** Sensoreinheit gemäß Anspruch 20,
**dadurch gekennzeichnet,**
**dass** das Mischungsverhältnis der Überlagerung der zwei unkalibrierten Sensorsignale (3, 4, $I_1$, $I_2$) durch eine Widerstandsdekade ($R_1$, $R_2$, $R_3$, $R_4$, $R_5$, $R_6$), ein digitales Potentiometer ($P_3$, $P_4$, $P_5$, $P_6$), ein Potentiometer ($P_3$, $P_4$, $P_5$, $P_6$) oder einen Trimmer ($P_3$, $P_4$, $P_5$, $P_6$) bestimmt ist.

**22.** Sensoreinheit gemäß Anspruch 20 oder 21,
**dadurch gekennzeichnet,**
**dass** die Platine (110) zur Aufnahme der Phasenmischer (10) freie Bestückungsplätze (200) aufweist, die zur individuellen Einstellung des Mischungsverhältnisses mehr als einen Widerstand ($R_3$, $R_4$, $R_5$, $R_6$) in paralleler Anordnung aufnehmen.

**Claims**

**1.** Method of electronically calibrating a position sensor unit (100) depending on the mechanical position with respect to a material measure (502) generating at least two phase-shifted periodic signals (3, 4, $I_1$, $I_2$) and possibly two phase-shifted reference signals ($IR_1$, $IR_2$, $CR_1$, $CR_2$) for the determination of the position,
**characterized by**
a simultaneous individual electronic superposition of two uncalibrated signals each (3, 4, $I_1$, $I_2$) to two new calibrated signals each ($C_1$, $C_2$) for calibrating absolute and relative phase errors.

**2.** Method according to claim 1,
**characterized by**
an analogue-electronic superposition of the uncalibrated signals (3, 4, $I_1$, $I_2$).

**3.** Method according to claim 1 or 2,
**characterized by**
the adjustment of an individual resistive ratio of two resistors ($R_1$, $R_2$, $R_3$, $R_4$, $R_5$, $R_6$, $P_3$, $P_4$, $P_5$, $P_6$) at the two inputs (12, 13) of a phase mixer (10, $IC_2$) for an analogue-electronic superposition of the uncalibrated sensor signals (3, 4, $I_1$, $I_2$).

**4.** Method according to claim 3,
**characterized by**
the individual adjustment of one feedback degree each at the inputs and outputs of a signal amplifier arrangement ($IC_1$) for amplifying or generating the uncalibrated sensor signals (3, 4, $I_1$, $I_2$) and feeding the phase mixer (10, $IC_2$) with the output signals of the signal amplifier arrangement ($IC_1$).

**5.** Method according to claim 3 or 4,
**characterized by**
the use of potentiometers ($P_3$, $P_4$, $P_5$, $P_6$), trimmers ($P_3$, $P_4$, $P_5$, $P_6$), resistance decades ($R_3$, $R_4$, $R_5$, $R_6$), individual resistors ($R_3$, $R_4$, $R_5$, $R_6$) or digital potentiometers ($P_3$, $P_4$, $P_5$, $P_6$) for adjusting the resistive ratio.

**6.** Method according to one of claims 2 to 5,
**characterized by**
the adjustment of the amplification factor of a single signal preamplification stage ($IC_1$) ensues upstream of a fixedly adjusted phase mixer (10, $IC_2$).

**7.** Method according to one of claims 2 to 6,
**characterized by**
the adjustment of the resistive, feedback or amplification ratio with the aid of an oscilloscope, wherein the outputs of two phase mixers (10, $IC_2$) each drive two axles of the oscilloscope located perpendicularly to each other, and the resistors ($R_1$, $R_2$, $R_3$, $R_4$, $R_5$, $R_6$, $P_3$, $P_4$, $P_5$, $P_6$) are varied until the shape of the Lissajous curves (350, 450) generated by the calibrated signals ($C_1$, $C_2$) corresponds to the nominal shape (450) when the sensors (1, 2, 107) are excited in a manner close to reality.

**8.** Method according to one of claims 3 to 7,
**characterized by**
the adjustment of the resistive, feedback or amplification ratio with the aid of a computer (600) with an electronic signal measuring arrangement (510), wherein one output of the phase mixers (10, $IC_2$) each feeds one measuring input (520) of the computer (600) each with a sensor output signal (3, 4, $I_1$, $I_2$), and the computer (600) calculates and outputs the optimum values of the linear factors, preferably the calculated properties of the electronic components ($R_1$, $R_2$, $R_3$, $R_4$, $R_5$, $R_6$, $P_3$, $P_4$, $P_5$, $P_6$) to be measured, from the measured signals (3, 4, $I_1$, $I_2$).

**9.** Method according to claim 8,
**characterized by**
the use of a calibration system (600) with at least one additional resistance simulation unit (510), wherein the resistance simulation unit (510) is brought into contact with the assembly points (200) of an incompletely assembled phase mixer board (110) of the machine unit (100) and the sensor unit (107) is excited in a manner close to reality, wherein the exciting unit (501, 502) transfers additional nominal parameters to the calibration system (660) and the calibration system (600) calculates and outputs the properties of the components ($R_1$, $R_2$, $R_3$, $R_4$, $R_5$, $R_6$, $P_3$, $P_4$, $P_5$, $P_6$) missing on the phase mixer board (110) from the resistance initially adjusted at the resistance simulation unit (510), the additional parameters and the measured uncalibrated signals ($I_1$, $I_2$, 3, 4) according to a predetermined algorithm, such that the calibrated sensor signals ($C_1$, $C_2$) correspond to the nominal shape (450) when the components ($R_1$, $R_2$, $R_3$, $R_4$, $R_5$, $R_6$, $P_3$, $P_4$, $P_5$, $P_6$) are used according to the computer output.

**10.** Method according to claim 9,
**characterized by**
the use of a digital potentiometer ($P_3$, $P_4$, $P_5$, $P_6$) instead of the resistance simulation unit (510), wherein the digital potentiometer ($P_3$, $P_4$, $P_5$, $P_6$) is varied in the state integrated in the amplifier board (110).

**11.** Method according to one of claims 1 to 10,
**characterized by**
the determination of the linear factors for the superposition of the uncalibrated sensor signals (3, 4, $I_1$, $I_2$) according to

$$\begin{bmatrix} C_1 \\ C_2 \end{bmatrix} = \begin{bmatrix} \cos(\Delta) & -\sin(\Delta) \\ \sin(\Delta) & \cos(\Delta) \end{bmatrix} \begin{bmatrix} \cos(\gamma)^{-1} & -\tan(\gamma) \\ 0 & 1 \end{bmatrix} \begin{bmatrix} I_1 \\ I_2 \end{bmatrix}$$

wherein $C_1$ stands for a first calibrated signal, $C_2$ for a second calibrated signal, $I_1$ for a first uncalibrated signal and $I_2$ for a second uncalibrated signal, A stands for the phase shift with respect to an external reference and $\gamma$ for the difference between the relative nominal and actual phase difference, and the linear factors are equal to the multiplied terms comprising trigonometrical functions of the constants $\Delta$ and $\gamma$.

**12.** Method according to claims 1 to 10,
**characterized by**
the determination of the linear factors for the superposition of the uncalibrated sensor signals $(3, 4, I_1, I_2)$ according to

$$C_1 = \cos(\Delta) \, \cos^{-1}(\gamma) I_1 \; - [\cos(\Delta) \tan(\gamma) \; + \sin(\Delta)] \, I_2$$

$$C_2 = \sin(\Delta) \, \cos^{-1}(\gamma) I_1 \; - [\sin(\Delta) \tan(\gamma) \; - \cos(\Delta)] \, I_2$$

wherein $C_1$ stands for a first calibrated signal, $C_2$ for a second calibrated signal, $I_1$ for a first uncalibrated signal and $I_2$ for a second uncalibrated signal, $\Delta$ stands for the phase shift with respect to an external reference and $\gamma$ for the difference between the relative nominal and actual phase shift, and the linear factors are equal to the multiplied terms comprising trigonometrical functions of the constants $\Delta$ and $\gamma$.

**13.** Method according to claim 9 or 10,
**characterized by**
the use of an automated calibration system (600) in which a sensor unit (107) to be calibrated is incorporated in a machine element (100) and excited in a manner close to reality, and in which characterizing measured quantities of the periodic signal $(3, 4, I_1, I_2)$ are determined from the comparison of excitation data in response to a fine positioning of the machine element (100), such as, for example, zero passages (700, 701) and maximum and minimum signal amplitudes (702), the actual relative and absolute phase shift $(\gamma, \Delta)$ is determined from these characterizing measured quantities, and an ideal value for the electronic components to be varied $(R_1, R_2, R_3, R_4, R_5, R_6, P_3, P_4, P_5, P_6)$ is calculated.

**14.** Method according to claim 10,
**characterized by**
the additional automatic adjustment of the electronic component $(P_3, P_4, P_5, P_6)$ to be varied by the calibration system (600).

**15.** Method according to claim 1,
**characterized by**
a digital-electronic superposition of the uncalibrated signals $(3, 4, I_1, I_2)$.

**16.** Method according to claim 1 or 15,
**characterized by**
analog/digital transformation of the uncalibrated sensor signals $(3, 4, I_1, I_2)$ and subsequent superposition of the signals $(3, 4, I_1, I_2)$ in an arithmetic unit.

**17.** Method according to one of claims 15 to 16,
**characterized by**
a subsequent retransformation of the digital signal to an analog signal.

**18.** Method according to one of claims 15 to 17,
**characterized by**
the use of a digital signal processor (DSP) for the superposition of the uncalibrated signals $(3, 4, I_1, I_2)$,

**19.** Method according to one of claims 1 to 18,
**characterized by**
the calibration of the point of intersection (IR$_s$) of two reference signals (IR$_1$, IR$_2$) by variation of the amplitude ratio of the reference signals (IR$_1$, IR$_2$).

**20.** Sensor unit (110) for the determination of a linear or rotary position of a machine element (100), in which at least two sensors (1, 2) generate two signals (3, 4, I$_1$, I$_2$) phase-shifted with respect to each other in response to the excitation by a transducer (502),
**characterized in that**
the sensor unit (110) comprises a circuit configuration (10, IC$_2$) for the superposition of two uncalibrated sensor signals (3, 4, I$_1$, I$_2$) each to two calibrated sensor signals (C$_1$, C$_2$).

**21.** Sensor unit according to claim 20,
**characterized in that**
the mixing ratio of the superposition of the two uncalibrated sensor signals (3, 4, I$_1$, I$_2$) is determined by a resistance decade (R$_1$, R$_2$, R$_3$, R$_4$, R$_5$, R$_6$), a digital potentiometer (P$_3$, P$_4$, P$_5$, P$_6$), a potentiometer (P$_3$, P$_4$, P$_5$, P$_6$), or a trimmer (P$_3$, P$_4$, P$_5$, P$_6$).

**22.** Sensor unit according to claim 20 or 21,
**characterized in that**
the board (110) comprises free rack positions (200) for accommodating the phase mixer (10) which accommodate more than one resistor (R$_3$, R$_4$, R$_5$, R$_6$) in parallel arrangement for the individual adjustment of the mixing ratio.

**Revendications**

**1.** Procédé destiné à l'étalonnage électronique d'une unité de capteur de position (100) en fonction de la position mécanique par rapport à une mesure matérialisée (502) produisant au moins deux signaux périodiques en décalage de phase (3, 4, I$_1$, I$_2$) et éventuellement deux signaux de référence en décalage de phase (IR$_1$, IR$_2$, CR$_1$, CR$_2$) destinés à déterminer la position, **caractérisé par** une superposition électronique individuelle simultanée de deux signaux non étalonnés (3, 4, I$_1$, I$_2$) avec respectivement deux nouveaux signaux étalonnés (C$_1$, C$_2$) prévue pour l'étalonnage d'erreurs de phase absolues et relatives.

**2.** Procédé selon la revendication 1, **caractérisé par** une superposition électronique analogique des signaux non étalonnés (3, 4, I$_1$, I$_2$).

**3.** Procédé selon la revendication 1 ou 2, **caractérisé par** le réglage d'un rapport de résistance individuel de deux résistances (R$_1$, R$_2$, R$_3$, R$_4$, R$_5$, R$_6$, P$_3$, P$_4$, P$_5$, P$_6$) au niveau des deux entrées (12, 13) d'un dispositif de mélange de phases (10, IC$_2$) pour la superposition électronique analogique des signaux de capteur non étalonnés (3, 4, I$_1$, I$_2$).

**4.** Procédé selon la revendication 3, **caractérisé par** le réglage individuel de chaque taux de réinjection aux entrées et sorties d'un dispositif d'amplification de signaux (IC,) destiné à l'amplification ou à la création des signaux de capteur non étalonnés (3, 4, I$_1$, I$_2$) et à l'application au dispositif de mélange de phases (10, IC$_2$) des signaux de sortie du dispositif d'amplification de signaux (IC$_1$).

**5.** Procédé selon la revendication 3 ou 4, **caractérisé par** l'utilisation de potentiomètres (P$_3$, P$_4$, P$_5$, P$_6$), trimmers (P$_3$, P$_4$, P$_5$, P$_6$), décades de résistance (R$_3$, R$_4$, R$_5$, R$_6$), résistances individuelles (R$_3$, R$_4$, R$_5$, R$_6$) ou potentiomètres numériques (P$_3$, P$_4$, P$_5$, P$_6$) destinés au réglage du rapport de résistance.

**6.** Procédé selon l'une des revendications 2 à 5, **caractérisé par** le réglage du gain d'amplification de chaque étage de préamplification du signal (IC$_1$) en amont d'un dispositif de mélange de phases (10, IC$_2$) à réglage fixe.

**7.** Procédé selon l'une des revendications 2 à 6, **caractérisé par** le réglage du rapport de résistance, de réinjection ou d'amplification à l'aide d'un oscilloscope, les sorties de respectivement deux dispositifs de mélange de phases (10, IC$_2$) étant visualisées sur deux axes de l'oscilloscope perpendiculaires entre eux et les résistances (R$_1$, R$_2$, R$_3$, R$_4$, R$_5$, R$_6$, P$_3$, P$_4$, P$_5$, P$_6$) étant modifiées jusqu'à ce que la forme des courbes de Lissajous (350, 450) produites par les signaux étalonnés (C$_1$, C$_2$) corresponde à la forme de consigne (450) lors de l'excitation des capteurs (1, 2, 107) de manière proche de la réalité.

8. Procédé selon l'une des revendications 3 à 7, **caractérisé par** le réglage du rapport de résistance, de réinjection ou d'amplification à l'aide d'un calculateur (600) avec un instrument de mesure de signal électronique (510), chaque sortie des dispositifs de mélange de phases (10, $IC_2$) renvoyant un signal de sortie de capteur (3, 4, $I_1$, $I_2$) à une entrée de mesure (520) du calculateur (600) et le calculateur (600) calculant et délivrant à partir des signaux mesurés (3, 4, $I_1$, $I_2$) les valeurs optimales des facteurs linéaires, préférentiellement les caractéristiques calculées des composants électroniques devant être mesurés ($R_1$, $R_2$, $R_3$, $R_4$, $R_5$, $R_6$, $P_3$, $P_4$, $P_5$, $P_6$).

9. Procédé selon la revendication 8, **caractérisé par** l'utilisation d'un système d'étalonnage (600) muni d'au moins une unité de simulation de résistance supplémentaire (510), l'unité de simulation de résistance (510) étant mise en contact avec les points d'implantation (200) d'une platine de dispositif de mélange de phases partiellement équipée (110) de l'unité mécanique (100) et l'unité de capteur (107) étant excitée de manière proche de la réalité, l'unité d'excitation (501, 502) transmettant des paramètres de consigne supplémentaires au système d'étalonnage (600) et le système d'étalonnage (600) calculant et délivrant, à partir de la résistance réglée au départ à l'unité de simulation de résistance (510), des paramètres supplémentaires et des signaux non étalonnés mesurés ($I_1$, $I_2$, 3, 4), selon un algorithme prédéterminé, les caractéristiques des composants manquants ($R_1$, $R_2$, $R_3$, $R_4$, $R_5$, $R_6$, $P_3$, $P_4$, $P_5$, $P_6$) sur la platine du dispositif de mélange de phases (110), de telle sorte que les signaux de capteur étalonnés ($C_1$, $C_2$) correspondent à la forme de consigne (450) lors de l'utilisation des composants calculés ($R_1$, $R_2$, $R_3$, $R_4$, $R_5$, $R_6$, $P_3$, $P_4$, $P_5$, $P_6$) après émission des calculs.

10. Procédé selon la revendication 9, **caractérisé par** l'utilisation d'un potentiomètre numérique ($P_3$, $P_4$, $P_5$, $P_6$) au lieu de l'unité de simulation de résistance (510), le potentiomètre numérique ($P_3$, $P_4$, $P_5$, $P_6$) étant modifié à l'état monté dans la platine d'amplificateur (110).

11. Procédé selon l'une des revendications 1 à 10, **caractérisé par** le calcul des facteurs linéaires destinés à la superposition des signaux de capteur non étalonnés (3, 4 $I_1$, $I_2$) selon

$$\begin{bmatrix} C_1 \\ C_2 \end{bmatrix} = \begin{bmatrix} \cos(\Delta) & -\sin(\Delta) \\ \sin(\Delta) & \cos(\Delta) \end{bmatrix} \begin{bmatrix} \cos(\gamma)^{-1} & -\tan(\gamma) \\ 0 & 1 \end{bmatrix} \begin{bmatrix} I_1 \\ I_2 \end{bmatrix}$$

$C_1$ représentant un premier signal étalonné, $C_2$ représentant un second signal étalonné, $I_1$ représentant un premier signal non étalonné et $I_2$ représentant un second signal non étalonné, $\Delta$ représentant le décalage de phase par rapport à une référence externe et $\gamma$ représentant la différence entre le décalage de phase réel et de consigne relatif et les facteurs linéaires étant égaux à la multiplication des termes contenant les fonctions trigonométriques des constantes $\Delta$ et $\gamma$.

12. Procédé selon les revendications 1 à 10, **caractérisé par** le calcul des facteurs linéaires destinés à la superposition des signaux de capteur non étalonnés (3, 4, $I_1$, $I_2$) selon

$$C_1 = \cos(\Delta)\, \cos^{-1}(\gamma) I_1 \ - [\cos(\Delta) \tan(\gamma) \ + \sin(\Delta)]\ I_2$$

$$C_2 = \sin(\Delta)\, \cos^{-1}(\gamma) I_1 \ - [\sin(\Delta) \tan(\gamma) \ - \cos(\Delta)]\ I_2$$

$C_1$ représentant un premier signal étalonné, $C_2$ représentant un second signal étalonné, $I_1$ représentant un premier signal non étalonné et $I_2$ représentant un second signal non étalonné, $\Delta$ représentant le décalage de phase par rapport à une référence externe et $\gamma$ représentant la différence entre le décalage de phase réel et de consigne relatif et les facteurs linéaires étant égaux à la multiplication des termes contenant les fonctions trigonométriques des constantes $\Delta$ et $\gamma$.

13. Procédé selon la revendication 9 ou 10, **caractérisé par** l'utilisation d'un système d'étalonnage automatisé (600), dans lequel une unité de capteur devant être étalonnée (107) est reçue dans un élément de machine (100) et excitée de manière proche de la réalité et dans lequel sont déterminées des valeurs de mesure caractérisant le signal périodique (3, 4, $I_1$, $I_2$) à partir de la comparaison des données d'excitation en fonction d'un positionnement fin de l'élément de machine (100), comme par exemple les passages par zéro (700, 701) et les amplitudes de signal maximales et minimales (702), le décalage de phase effectif relatif et absolu ($\gamma$, $\Delta$) étant déterminé et une valeur idéale pour les composants électroniques modifiables ($R_1$, $R_2$, $R_3$, $R_4$, $R_5$, $R_6$, $P_3$, $P_4$, $P_5$, $P_6$) étant calculée à partir de ces valeurs de mesure caractéristiques.

14. Procédé selon la revendication 10, **caractérisé par** le réglage automatique supplémentaire des composants électroniques devant être modifiés ($P_3$, $P_4$, $P_5$, $P_6$) par l'intermédiaire du système d'étalonnage (600).

15. Procédé selon la revendication 1, **caractérisé par** une superposition électronique numérique des signaux non étalonnés (3, 4, $I_1$, $I_2$).

16. Procédé selon la revendication 1 ou 15, **caractérisé par** la conversion analogique/numérique des signaux de capteur non étalonnés (3, 4, $I_1$, $I_2$) et la superposition ultérieure des signaux (3, 4, $I_1$, $I_2$) dans une unité arithmétique.

17. Procédé selon l'une des revendications 15 à 16, **caractérisé par** une conversion inverse ultérieure du signal numérique en signal analogique.

18. Procédé selon l'une des revendications 15 à 17, **caractérisé par** l'utilisation d'un processeur de signal numérique (DSP) destiné à la superposition des signaux non étalonnés (3, 4, $I_1$, $I_2$).

19. Procédé selon l'une des revendications 1 à 18, **caractérisé par** l'étalonnage de l'intersection ($IR_S$) de deux signaux de référence ($IR_1$, $IR_2$) par la variation du rapport d'amplitude des signaux de référence ($IR_1$, $IR_2$).

20. Unité de capteur (110) destinée à déterminer une position linéaire ou rotative d'un élément de machine (100) dans laquelle au moins deux capteurs (1, 2) produisent deux signaux (3, 4, $I_1$, $I_2$) en décalage de phase relatif en fonction de l'excitation par un capteur (502), **caractérisé par le fait que** l'unité de capteur (110) présente un montage (10, $IC_2$) destiné à superposer deux signaux de capteur non étalonnés (3, 4, $I_1$, $I_2$) respectivement à deux signaux de capteur étalonnés ($C_1$, $C_2$).

21. Unité de capteur selon la revendication 20, **caractérisée par le fait que** le rapport de mélange de la superposition des deux signaux de capteur non étalonnés (3, 4, $I_1$, $I_2$) est défini par une décade de résistance ($R_1$, $R_2$, $R_3$, $R_4$, $R_5$, $R_6$), un potentiomètre numérique ($P_3$, $P_4$, $P_5$, $P_6$), un potentiomètre ($P_3$, $P_4$, $P_5$, $P_6$) ou un trimmer ($P_3$, $P_4$, $P_5$, $P_6$).

22. Unité de capteur selon la revendication 20 ou 21, **caractérisée par le fait que** la platine (110) destinée à la réception des dispositifs de mélange de phases (10) présente des emplacements de montage libres (200) recevant, pour le réglage individuel du rapport de mélange, plus d'une résistance ($R_3$, $R_4$, $R_5$, $R_6$) en parallèle.

Fig. 3

Fig. 4

Fig. 1

Fig. 2

**Fig. 5**

Fig. 6

EP 1 632 753 B1

Fig. 7

**Fig. 8**

R1 = 4,7 kΩ
R2 = 5,6 kΩ
R3 = 1,1 kΩ
R4 = 3,3 kΩ
R5 = 4,7 kΩ
R6 = 5,6 kΩ

$S_1$
x = 56,73 cm
Δ = 23°
γ = 1,5°

$S_2$
x = 56,73 cm
Δ = 23°
γ = 1,5°

$S_3$
x = 56,73 cm
Δ = 23°
γ = 1,5°

Δx

EP 1 632 753 B1

Fig. 9

$\pi/2 + \gamma$

300

350

700 701

$I_2$  $I_1$

$\cos(\omega x + \Delta)$

702

400

450

$\pi/2$

$C_2$  $C_1$

$\Delta$

EP 1 632 753 B1

Fig. 10

EP 1 632 753 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10041092 A1
- DE 3117554 C2
- DE 10020979 A1
- DE 10260862 A1
- DE 19911822 C1
- DE 19914447 A1
- DE 4331151 C2
- DE 19950902 A1